# FASCICULE DE BREVET EUROPEEN

(11) **EP 4 452 752 B1**
(45) Date de publication et mention de la délivrance du brevet: **04.02.2026**
(21) Numéro de dépôt: 22844252.1
(22) Date de dépôt: 13.12.2022
(51) Int. Cl.: B64C 11/38, F01D 7/00, F04D 29/32, F16H 57/04

(54) **DISPOSITIF DE TRANSFERT DE FLUIDE AVEC MOYENS DE CONNEXION HYDRAULIQUE ET MECANIQUE**
FLÜSSIGKEITSÜBERTRAGUNGSANORDNUNG MIT MITTELN ZUM HYDRAULISCHEN UND MECHANISCHEN ANSCHLUSS
FLUID TRANSFER DEVICE WITH MEANS FOR HYDRAULIC AND MECHANICAL CONNECTION

(30) Priorité: 20.12.2021 FR 2113966
(43) Date de publication de la demande: 30.10.2024
(73) Titulaire: SAFRAN AIRCRAFT ENGINES, 75015 Paris (FR)
(72) Inventeur: MILLIER, Vincent François Georges, 77550 MOISSY-CRAMAYEL (FR); RODA, Jean Charles Olivier, 77550 MOISSY-CRAMAYEL (FR)
(74) Mandataire: Gevers & Orès
(86) Numéro de dépôt international: PCT/FR2022/052322
(87) Numéro de publication internationale: WO 2023/118688

(56) Documents cités:
- EP-A1- 3 138 771
- EP-A1- 3 144 219
- WO-A1-2015/052459
- FR-A1- 2 993 631

## Description

### Domaine de l'invention

La présente invention concerne le domaine des dispositifs de transfert de fluide entre un stator et un rotor. Le présente invention concerne en outre le domaine des turbomachines comprenant des dispositifs de transfert, ainsi que le domaine des procédés de montage de dispositifs de transfert de fluide dans un organe d'une turbomachine.

### Arrière-plan technique

L'art antérieur comprend les documents WO-A1-2015/052459, EP-A1-3138771, et FR-A1-2993631.

Certaines machines comprennent un dispositif de transfert de fluide, tel que de l'huile ou carburant, permettant le passage du fluide d'un repère fixe (stator) vers un repère tournant (rotor), ou inversement, où se trouvent des organes qui nécessitent une alimentation et une lubrification en continu afin de préserver leur durée de vie, leur fonctionnement ainsi que la performance de la machine que ceux-ci équipent. Un tel dispositif de ce type est connu sous le sigle anglais « OTB » pour « Oil Transfer Bearing ».

Un exemple de dispositif de transfert de fluide est décrit dans le document EP-A1-3144219 qui décrit un dispositif de transfert de fluide qui est monté mobile à l'intérieur de l'actionneur qui équipe un système de changement de pas d'aubes de turbomachine. Le dispositif de transfert comprend au moins une canalisation en communication fluidique avec des moyens d'alimentation du moyen de commande selon le mode de fonctionnement de la turbomachine. L'actionneur comprend un corps mobile qui se déplace par rapport à un corps annulaire. Des paliers sont montés radialement entre le corps mobile et le dispositif de transfert pour permettre la rotation du corps mobile par rapport au dispositif de transfert de fluide. Ce dernier se déplace en translation suivant l'axe longitudinal. Un collier d'arrêt fixe en déplacement et par rapport auquel tourne le piston grâce à des paliers est également monté à l'intérieur du dispositif de transfert.

L'agencement du dispositif de transfert par rapport à l'actionneur et au collier d'arrêt est complexe car il nécessite le déplacement de plusieurs pièces les unes par rapport aux autres. En particulier, la canalisation du dispositif de transfert doit être alignée avec des moyens d'alimentation de l'actionneur et du collier d'arrêt. Il n'y a aucun moyen de réaliser cette connexion hydraulique, ni de vérifier la fiabilité de cette connexion hydraulique. Le montage de ces pièces, vu l'alignement nécessaire suivant le mode de fonctionnement, peut-être long et couteux. Par ailleurs, la configuration du dispositif de transfert de fluide implique le démontage de l'ensemble de l'actionneur avant de démonter le dispositif de transfert. Cela peut impacter le temps de réparation pour la maintenance.

### Résumé de l'invention

L'objectif de la présente invention est de fournir un dispositif de transfert de fluide dont la configuration, simple, permet un montage et un démontage rapide.

Nous parvenons à cet objectif conformément à l'invention grâce à un dispositif de transfert de fluide pour turbomachine d'axe longitudinal X, le dispositif de transfert comportant une partie stator qui est destinée à être reliée à un équipement statorique de la turbomachine et une partie rotor dans lequel est engagée la partie stator, l'équipement statorique comprenant au moins une conduite alimentée par une source d'alimentation et en communication fluidique avec au moins une canalisation de la partie stator, la partie stator et l'équipement statorique comportant une interface de fixation destinée à recevoir de manière amovible des organes de fixation, l'interface de fixation et les organes de fixation étant configurés de manière à réaliser une coïncidence, avec étanchéité, de la canalisation et de la conduite, et en ce que le dispositif de transfert de fluide comprend au moins un passage permettant l'accès d'un outil externe en amont du dispositif de transfert de fluide pour accéder aux organes de fixation et traversant de part et d'autre le dispositif de transfert.

Ainsi, cette solution permet d'atteindre l'objectif susmentionné. En particulier, un tel dispositif de transfert agencé de manière compacte et dont la partie stator est destinée à être fixée à un stator permet d'un côté (en aval) de réaliser les connexions hydraulique et mécanique de manière quasi automatique et en aveugle et d'avoir accès aux organes de fixation pour la connexion mécanique des pièces depuis l'autre côté (en amont) du dispositif de transfert. Le dispositif de transfert de fluide présente un faible nombre de liaisons à démonter, soit ici une interface de fixation qui facilite le montage et le démontage. Cela implique un temps de pose et dépose réduit et un gain économique, notamment lorsque le dispositif de transfert doit équiper un aéronef.

Le dispositif de transfert comprend également l'une ou plusieurs des caractéristiques suivantes, prises seules ou en combinaison :
- la partie rotor s'étend entre une face amont et une face aval suivant l'axe longitudinal, la partie rotor comprenant un alésage central centré sur l'axe longitudinal et dans lequel est engagée la partie stator, l'alésage central débouchant dans une première cavité s'ouvrant sur la face amont et dans une deuxième cavité s'ouvrant sur la face aval, des paliers de guidage en rotation de la partie rotor par rapport à la partie stator étant placés dans la première cavité et dans la deuxième cavité, la partie stator s'étendant, suivant l'axe longitudinal, entre une première extrémité qui est disposée dans la première cavité et une deuxième extrémité qui s'étend à l'extérieur de la partie rotor.
- la partie stator comprend une première canalisation et une deuxième canalisation qui sont distinctes, au moins une portion de la deuxième canalisation s'étendant à l'extérieur de la première canalisation.
- la partie rotor comprend des canaux qui sont en communication fluidique d'une part, avec les canalisations et d'autre part, avec des moyens d'alimentation d'un organe de la turbomachine.
- la partie rotor comprend le passage qui est disposé radialement à l'extérieur de l'alésage central et en ce que l'interface de fixation comprend une collerette portée par l'équipement statorique et une bride radiale portée par la partie stator, la bride et la collerette s'étendant radialement vers l'extérieur et étant fixées ensemble par les organes de fixation assurant une liaison axiale qui est alignée avec le passage.
- la bride radiale de la partie stator comprend au moins un trou d'axe B et la partie rotor présente un diamètre radialement externe qui est supérieur au diamètre défini par l'axe du trou de la bride radiale de la partie stator.
- la collerette de l'équipement statorique comporte au moins un trou correspondant et en ce que les organes de fixation sont imperdables et comprennent au moins un écrou serti sur la collerette radiale de l'équipement statorique en regard du trou correspondant, au moins une vis étant retenue dans le trou de la partie stator par une bague de retenue, et des moyens de mise à l'écart de la vis du trou correspondant.
- la partie stator est dotée d'un alésage interne qui est centré sur l'axe longitudinal et qui forme au moins en partie la première canalisation, la deuxième canalisation, annulaire, étant disposée radialement à l'extérieur de la première canalisation et de manière coaxiale avec l'axe longitudinal.
- la partie stator est dotée d'un alésage interne qui est centré sur l'axe longitudinal et qui forme au moins en partie le passage, la première canalisation, annulaire, étant disposée radialement à l'extérieur de l'alésage interne et de manière coaxiale avec l'axe longitudinal et en ce que la deuxième canalisation, annulaire, est disposée radialement à l'extérieur de la première canalisation et de manière coaxiale avec l'axe longitudinal.
- l'équipement de statorique comprend une cavité d'ancrage dans laquelle est emmanchée de manière étanche et en aveugle la deuxième extrémité de la partie stator, la cavité d'ancrage débouchant dans une ouverture ménagée dans une face amont de l'équipement de statorique et comprenant un fond disposé à l'opposé de l'ouverture.
- l'interface de fixation comprend une première paroi qui est disposée à la deuxième extrémité de la partie stator et une deuxième paroi formant un fond de la cavité d'ancrage, la première paroi étant fixée à la deuxième paroi de la cavité d'ancrage via les organes de fixation assurant une liaison axiale qui est alignée avec l'axe de l'alésage interne.
- la partie rotor présente un diamètre radialement externe qui est supérieur ou égal au diamètre externe de l'organe de stator défini par la surface externe, la partie stator s'étendant entre la partie rotor et l'équipement statorique suivant l'axe longitudinal.
- la partie rotor présente un diamètre radialement externe qui est supérieur ou égal au diamètre externe de la bride de la partie stator, la partie stator s'étendant entre la partie rotor et l'équipement statorique suivant l'axe longitudinal.
- le dispositif de transfert comprend des moyens en communication fluidique d'une part avec la source d'alimentation et d'autre part avec le moyen de commande.
- des moyens d'étanchéité sont agencés entre la bride et la collerette.
- des moyens d'étanchéité sont agencés entre les canalisations et les conduites.
- la partie rotor du dispositif de transfert est mobile en rotation autour de la partie stator suivant l'axe longitudinal.
- les organes de fixation sont placés en aval du dispositif de transfert.

L'invention concerne en outre une turbomachine d'aéronef comprenant au moins un dispositif de transfert de fluide présentant l'une quelconque des caractéristiques précédentes.

L'invention concerne en outre un aéronef comprenant au moins une turbomachine telle que susmentionnée.

L'invention concerne également un procédé de montage d'un dispositif de transfert tel que susmentionné dans un organe de turbomachine, le procédé comprenant :
- une étape d'assemblage du dispositif de transfert de fluide dans laquelle la partie stator est insérée dans la partie rotor,
- une étape de fixation du dispositif de transfert de fluide sur le moyen de commande,
- une étape de mise en place du moyen de commande équipé du dispositif de transfert de fluide dans l'organe de turbomachine, et
- une étape de fixation de l'interface de fixation de la partie stator et de l'équipement statorique au moyen des organes de fixation de manière à réaliser une coïncidence, avec étanchéité, de la canalisation du dispositif de transfert de fluide et de la conduite de l'équipement statorique.

Le procédé comprend l'une ou plusieurs des étapes et/ou caractéristiques suivantes, prises seules ou en combinaison :
- l'étape de fixation comprend une sous étape d'insertion de l'outil externe dans au moins le passage du dispositif de transfert de fluide pour accéder aux organes de fixation.
- l'étape de fixation du dispositif de transfert de fluide sur le moyen de commande comprend une sous étape de montage du dispositif de transfert de fluide à l'intérieur du moyen de commande.
- une étape d'insertion du fourreau dans au moins un passage.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 représente un exemple de dispositif de transfert de fluide ménagé dans un organe et qui comprend une partie rotor solidaire de l'organe et une partie stator solidaire d'un stator selon l'invention ;
La figure 2 est une vue schématique, en coupe axiale et partielle d'un exemple de turbomachine avec une soufflante ou hélice à laquelle s'applique l'invention ;
La figure 3 est une vue en perspective et en coupe partielle du dispositif de transfert de fluide et une interface de fixation entre une partie stator et un stator selon l'invention ;
La figure 4 est une vue en coupe axiale d'une interface de fixation avec des organes de fixation imperdables selon l'invention ;
La figure 5 est une vue de détail et en coupe axiale d'une partie rotor du dispositif de transfert de fluide et des moyens permettant l'accès à une interface de fixation selon l'invention ;
La figure 6 illustre en perspective un exemple d'élément pour réaliser une interface de fixation entre un dispositif de transfert de fluide et un organe selon l'invention ;
La figure 7a, la figure 7b, la figure 7c et la figure 7d sont des vues en coupe axiale représentant différentes étapes de montage d'un dispositif de transfert de fluide sur un stator selon l'invention ;
La figure 8 représente un exemple de dispositif de transfert de fluide selon l'invention ;
La figure 9 représente encore un autre mode de réalisation suivant une coupe axiale et partielle d'un dispositif de transfert de fluide selon l'invention.

### Description détaillée de l'invention

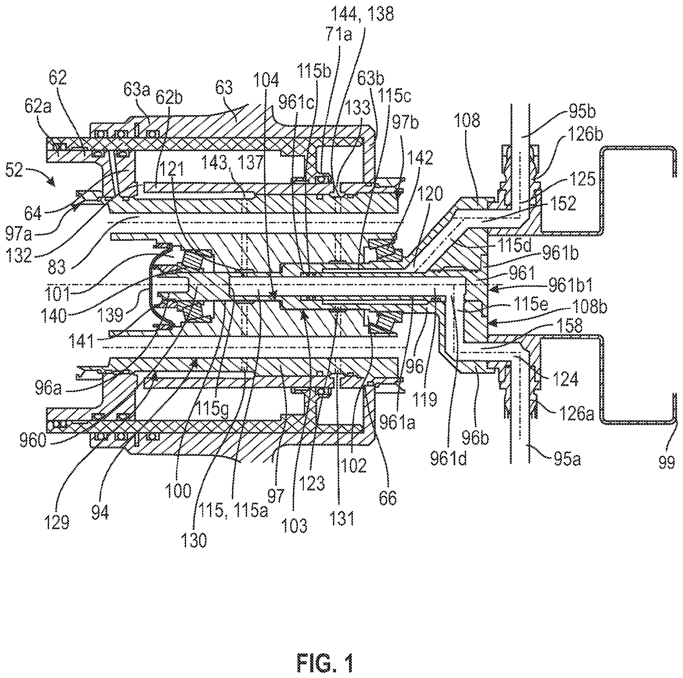

La figure 1 représente un dispositif de transfert 94 de fluide destiné à acheminer ledit fluide pour alimenter un organe de turbomachine entre un stator et un rotor. Le dispositif de transfert ou « OTB » pour « Oil Transfer Bearing » en anglais comprend une partie stator et une partie rotor, l'une étant engagée de l'autre comme expliqué ci-après.

Un tel dispositif de transfert 94 est destiné à être monté dans une turbomachine 1, en particulier une turbomachine d'aéronef. La turbomachine 1 peut être un turboréacteur, par exemple une turbomachine équipée d'une soufflante carénée (turbosoufflante) ou d'un turbopropulseur, par exemple une turbomachine équipée d'une hélice non carénée (« open rotor », « USF » pour «Unducted Single Fan » ou « UDF » pour « Unducted Fan »).

Bien entendu, le dispositif de transfert 94 peut être installé dans d'autres types de turbomachines et plus largement à tous types de machines qui nécessitent de faire transiter un fluide entre un repère tournant et un repère fixe.

De manière générale et dans la suite de la description, le terme « soufflante » est employé pour désigner indifféremment une soufflante ou une hélice.

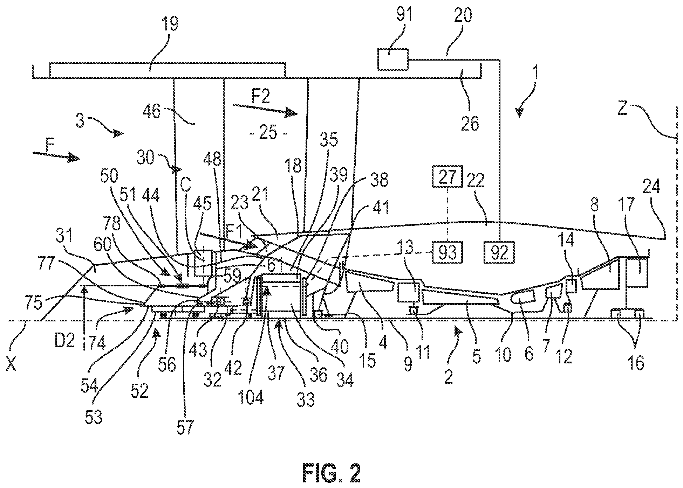

Dans la présente invention, et de manière générale, les termes « amont », « aval » « axial » et « axialement » sont définis par rapport à la circulation des gaz dans la turbomachine et ici suivant l'axe longitudinal X (et même de gauche à droite sur la figure 2). De même, les termes « radial », « radialement », « interne », « intérieur », « externe » et « extérieur »sont définis par rapport à un axe radial Z perpendiculaire à l'axe longitudinal X et au regard de l'éloignement par rapport à l'axe longitudinal X.

Sur la figure 2, la turbomachine 1 comprend un générateur de gaz 2 en amont duquel est montée une soufflante 3. Le générateur de gaz 2 comporte typiquement d'amont en aval, un compresseur basse pression 4, un compresseur haute pression 5, une chambre de combustion 6, une turbine haute pression 7 et une turbine basse pression 8. La turbomachine 1 peut comprendre un corps basse pression entraîné par un arbre basse pression 9 et un corps haute pression entraîné par un arbre haute pression 10. Les corps basse et haute pression sont guidés en rotation autour de l'axe longitudinal par des paliers à roulements en amont et en aval. Ces paliers sont portés au moins en partie par les arbres basse pression 9 et haute pression 10. L'arbre haute pression 10 s'étend radialement au moins en partie à l'extérieur de l'arbre basse pression 9 et sont coaxiaux.

Dans une autre configuration non représentée, le corps basse pression ou de faible pression comprend le compresseur basse pression qui est relié à une turbine de pression intermédiaire. Une turbine libre de puissance est montée en aval de la turbine de pression intermédiaire et est reliée à la soufflante décrite ci-après via un arbre de transmission de puissance pour l'entraîner en rotation.

La soufflante 3 comprend une série d'aubes 30 qui est entourée (ou carénée) par un carter de soufflante 19 ou non carénée. La soufflante 3 comprime un flux d'air qui entre dans la turbomachine en se divisant en un flux d'air primaire F1 et en flux d'air secondaire F2 au niveau d'un bec de séparation 21. Ce dernier est porté par un carter d'entrée 18 centré sur l'axe longitudinal X. Le carter d'entrée 18 est prolongé en aval par un carter externe ou carter inter-veine 22. Le flux d'air primaire F1 circule dans une veine primaire 23 qui traverse le générateur de gaz 2 et s'en échappe par une tuyère primaire (non représentée). Le flux d'air secondaire F2 circule autour du carter externe ou inter-veine 22 (par exemple dans une veine secondaire 25 et s'en échappe par une tuyère secondaire (non représentée)). La veine primaire 23 et la veine secondaire 25 sont séparées par le carter inter-veine 22.

La soufflante 3 comprend un rotor de soufflante 31 qui est traversé par un arbre de soufflante 32, cylindrique, centré sur l'axe longitudinal X et qui entraîne en rotation le rotor de soufflante 31 autour de l'axe longitudinal X. L'arbre de soufflante 32 est entraîné en rotation par l'arbre basse pression via un réducteur de vitesse 34 permettant de réduire la vitesse de rotation de l'arbre de soufflante 32 par rapport à la vitesse de l'arbre basse pression 9. D'autre part, le réducteur de vitesse 34 permet l'agencement d'une soufflante avec un diamètre important de manière à augmenter le taux de dilution.

Le réducteur 34 est de type à train d'engrenage planétaire. Ce dernier est logé dans une enceinte de lubrification 35 dans lequel celui-ci est lubrifié. Typiquement, le réducteur de vitesse 34 comprend un solaire 36 (ou planétaire intérieur), des satellites 37, un porte-satellites 38 et une couronne extérieure 39 (ou planétaire extérieur). Dans le présent exemple, le solaire 36 est centré sur l'axe longitudinal X et est couplé en rotation avec l'arbre basse pression 9. Les satellites 37 (sous forme de pignons) sont portés par le porte-satellites 38 et tournent chacun autour d'un axe sensiblement parallèle à l'axe longitudinal X. Chacun des satellites 37 engrène avec le solaire 36 et la couronne extérieure 39. Les satellites 37 (au moins trois) sont disposés radialement entre le solaire 36 et la couronne extérieure 39. La couronne extérieure 39 est couplée en rotation avec l'arbre de soufflante 32 et est centrée sur l'axe longitudinal. De la sorte, le solaire 36 forme l'entrée du réducteur de vitesse 34 tandis que la couronne extérieure 39 forme la sortie de celui-ci. Le porte-satellites 38 est en revanche fixe par rapport à la couronne 39. Le porte-satellites 38 est en particulier fixé à une structure fixe de la turbomachine via une virole de support 40 rigidement fixée au carter d'entrée 18 de la turbomachine. La virole de support 40 est également fixée à un premier support de palier 41, fixe, solidaire du carter d'entrée 18. De manière alternative, le porte-satellites 38 est fixé sur une virole radialement interne du carter d'entrée 18 ou encore directement sur un deuxième support de palier 44 qui est installé en amont du réducteur de vitesse 34.

Les aubes de soufflante 30 sont à calage variable. Chaque aube de soufflante 30 comprend un pied 45 et une pale 46 s'étendant radialement vers l'extérieur depuis le pied 45. Le pied 45 de chaque aube 30 se présente typiquement sous la forme d'un arbre qui est monté pivotant, suivant un axe de calage C, dans un logement 47 interne d'un anneau 48. L'anneau 48 est solidaire du rotor de soufflante 31, est centré sur l'axe longitudinal et comprend plusieurs logements 47 répartis régulièrement autour de l'axe X. Il y a autant de logements 47 que de pied 45 d'aubes. L'axe de calage C est parallèle à l'axe radial Z. L'arbre de chaque pied 45 est monté pivotant grâce à des paliers de guidage (au moins deux par exemple) (non représentés) montés dans chaque logement 47 et de manière superposée suivant l'axe radial Z.

Le calage des aubes de soufflante 30 est réalisé grâce à un système de changement de pas 50 installé dans le rotor de soufflante 31 et en amont du réducteur de vitesse 34. Le système de changement de pas 50 comprend un moyen de commande 52 destiné à agir sur les aubes de la soufflante 30. Le système de changement de pas 50 comprend également un mécanisme de liaison 51 relié aux aubes de soufflante 30 et au moyen de commande 52.

En référence à la figure 2, le moyen de commande 52 est agencé en amont du réducteur de vitesse 34. Le moyen de commande 52 comprend un corps annulaire 53 et un corps mobile 54 qui se déplace par rapport au corps annulaire 53. Avantageusement, mais non limitativement, le moyen de commande 52 est un actionneur linéaire (vérin linéaire) d'axe coaxial à l'axe longitudinal X. Alternativement, l'actionneur est de type rotatif (vérin rotatif) suivant l'axe longitudinal X. Dans le présent exemple, le corps annulaire 53 est solidaire en rotation de l'arbre de soufflante 32. Le corps mobile 54 se déplace majoritairement en translation le long de l'axe longitudinal X par rapport au corps annulaire 53. Le corps mobile 54 se déplace également suivant un léger mouvement de rotation par oscillation par rapport au corps annulaire. Le corps annulaire 53 est donc tournant mais non translatant. De manière alternative, le corps mobile 54 se déplace uniquement en translation.

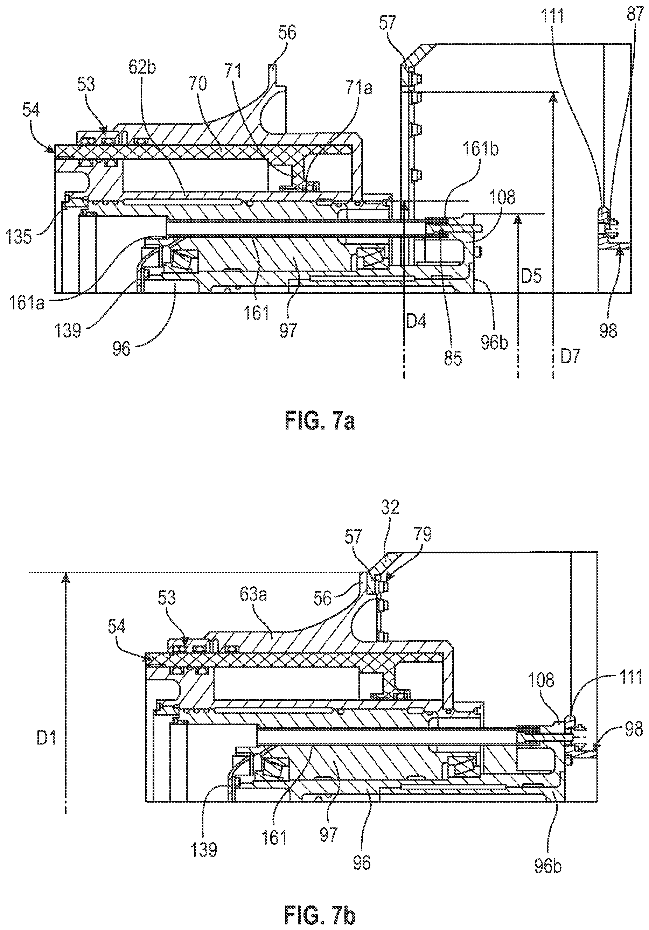

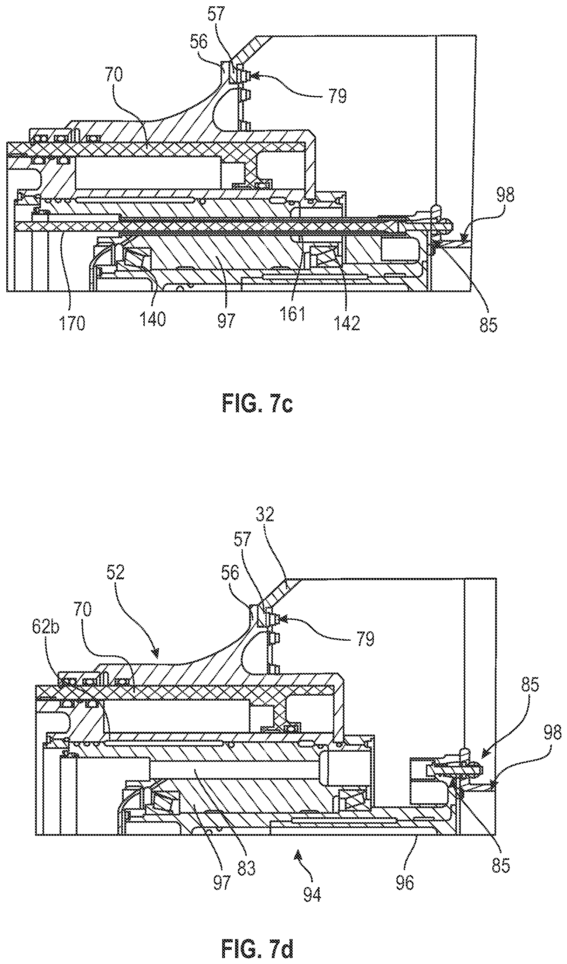

Sur la figure 2, le corps annulaire 53 comprend une première bride 56 qui s'étend radialement vers l'extérieur et qui est fixée à une deuxième bride 57 de l'arbre de soufflante 32. Les brides sont fixées ensemble via des organes de fixation 79 (cf. figures 7b, 7c, 7d) tels que des vis, écrous, boulons, ou tout autre élément adéquat permettant un montage et un démontage rapide. Suivant une alternative non représentée, la deuxième bride 57 est portée par un tourillon qui est fixé sur la paroi externe de l'arbre de soufflante 32 grâce à des éléments de fixation adéquats. L'anneau 48 de maintien des aubes est également relié à l'arbre de soufflante 32 par l'intermédiaire d'un cône de soufflante 59 mobile en rotation. A cet effet, le cône de soufflante 59 comprend une troisième bride radiale 60 qui est fixée aux brides 56, 57 du corps annulaire et de l'arbre de soufflante. Les trois brides 56, 57 et 60 sont fixées ensemble par les organes de fixation. Par ailleurs, au moins les brides 56, 57 présentent un diamètre externe (défini par leur bordure externe) (et ici représenté par le diamètre D1 de la bride 56 sur la figure 7b) inférieur au diamètre D2 (représenté sur la figure 2) qui est défini par le mécanisme de liaison 51. Les surfaces des bordures externes des brides 56, 57 sont affleurantes. En d'autres termes, ces brides 56, 57 sont à plus bas rayon que le mécanisme 51. De la sorte, l'ensemble moyen de commande 52 et dispositif de transfert 94 de fluide peut être inséré ou extrait en traversant le mécanisme de liaison 51 encore fixé sans obstacle.

Le cône de soufflante 59 comprend d'autre part, une patte radiale 61 qui est fixée à un flanc aval de l'anneau 48. La fixation du cône de soufflante 59 en aval de l'anneau 48 permet l'intégration du mécanisme de liaison 51 (en amont) et de réduire l'encombrement axial. L'anneau 48 comprend également un flanc amont (opposé axialement au flanc aval) qui est fixé au rotor de soufflante 31. En liant le corps annulaire 53 au rotor de soufflante (anneau 48 notamment), les efforts transitant du rotor de soufflante au moyen de commande 52 et au dispositif de transfert 94 de fluide décrit plus loin dans la description, sont évités. Ici, le chemin d'effort passe directement du cône de soufflante 59 à l'arbre de soufflante 32 et aux paliers de guidage 42, 43 de l'arbre de soufflante 32 (cf. figure 1). Les paliers de guidage 42, 43 sont portés par le support de palier 44. Les paliers 42 et 43 sont disposés en amont du réducteur de vitesse.

Sur la figure 1, le corps annulaire 53 est globalement cylindrique, centré sur l'axe X, et de section globalement circulaire. Une telle configuration permet de limiter l'encombrement du moyen de commande 52 dans le rotor de soufflante 31 tant axialement que radialement. Le corps annulaire 53 forme le cylindre ou boîtier du vérin et le corps mobile 54 forme le piston. En particulier, le corps annulaire 53 est formé de deux pièces dénommées ci-après premier carter cylindrique 62 et deuxième carter cylindrique 63. Les premier et deuxième carters sont creux et centrés sur l'axe longitudinal X. Le premier carter 62 présente deux sections différentes de sorte à former un corps principal 62a et une portion tubulaire 62b. La portion tubulaire 62b creuse présente un diamètre inférieur à celui du corps principal 62a. La portion tubulaire 62b prolonge en aval le corps principal 62a. La portion tubulaire 62b est séparée du corps principal 62a par un épaulement 64.

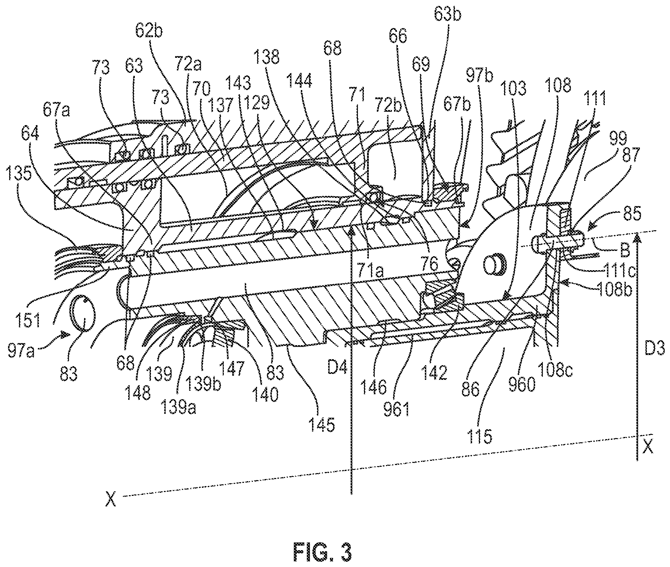

En référence aux figures 1 et 3, le deuxième carter cylindrique 63 est monté de manière étanche autour du premier carter 62 et de manière à former un volume étanche. Le deuxième carter 63 comprend une paroi radiale 63b depuis laquelle s'étend une paroi cylindrique 63a d'axe centré sur l'axe longitudinal X. La paroi cylindrique 63a s'étend radialement autour (à l'extérieur) de la portion tubulaire 62a et à distance pour former le volume. La paroi cylindrique 63a porte la bride 56. La paroi radiale 63b est définie dans un plan perpendiculaire à l'axe longitudinal X. La paroi radiale 63b comprend un trou 66 central délimité par une surface annulaire. Le trou 66 traverse la paroi radiale 63b de part et d'autre suivant l'axe longitudinal X.

La portion tubulaire 62b s'étend entre une extrémité amont 67a et une extrémité aval 67b. L'extrémité aval 67b traverse le trou central 66 pour se retrouver en aval de la paroi radiale 63b. Une portion d'une surface interne (tournée vers l'intérieur du moyen de commande) de la paroi radiale 63b, s'étendant dans un plan radial et entourant le trou central 66 est en appui contre une surface de portée radiale de la portion tubulaire 62b. La surface de portée est agencée au niveau de l'extrémité aval 67b de la portion tubulaire 62b. Un joint 68 annulaire est disposé radialement entre la surface annulaire bordant le trou central 66 et la surface radialement externe de l'extrémité amont 67b. Un organe de serrage 69 tel qu'un écrou, centré sur l'axe longitudinal, est monté autour de la surface radialement externe de l'extrémité aval 67b et en butée axiale contre la paroi radiale 63b (contre une surface externe opposée à la surface interne).

Le corps mobile 54 comprend une paroi cylindrique 70, annulaire, qui s'étend suivant l'axe longitudinal X et qui est disposée de manière étanche radialement entre le premier carter 62 et le deuxième carter 63 grâce à des joints d'étanchéité et des segments de guidage 76. Le corps mobile 54 comprend en outre une paroi annulaire 71 qui s'étend radialement vers l'intérieur depuis de la paroi cylindrique 70. La paroi annulaire 71 vient en contact étanche avec une surface externe de la portion tubulaire 62b. En d'autres termes, la paroi annulaire comprend également un trou traversant d'axe longitudinal X. La portion tubulaire 62b est installée à travers le trou de la paroi annulaire 71 de manière à définir deux chambres 72a, 72b à volume variable dans le corps annulaire 53. Les chambres 72a, 72b sont disposées entre le corps annulaire 53 et le corps mobile 54. Des joints d'étanchéité et des segments de guidage 76 sont disposés entre la bordure libre 71a de la paroi annulaire 71 et la surface radialement externe de la paroi cylindrique 70 de la portion tubulaire 62b. En particulier, des gorges ouvertes vers l'intérieur sont ménagées au niveau de cette bordure libre 71a pour recevoir un segment de guidage (ou un joint annulaire plat) et un joint torique.

Le corps mobile 54 se déplace suivant l'axe longitudinal. Des moyens d'étanchéité 73 sont également disposés d'une part, de part et d'autre de la paroi cylindrique 70 de manière à éviter les fuites d'un fluide alimentant les chambres 72a, 72b, et d'autre part, radialement autour de la portion tubulaire 62b.

Toujours sur la figure 1, le corps mobile 54 se déplace axialement sous l'action d'une commande du moyen de commande 52, et en particulier de la pression d'un fluide circulant dans chaque chambre. Pour cela, le système de changement de pas 50 comprend des moyens d'alimentation assurant la commande de celui-ci et décrits plus loin dans la description. Le fluide reçu dans les chambres 72a, 72b est par exemple un fluide hydraulique sous pression, provenant d'un système d'alimentation fluidique 90, de sorte que le corps mobile 54 occupe au moins deux positions. Bien entendu, le corps mobile 54 occupe plusieurs positions intermédiaires en fonction des différentes phases de vol de l'aéronef. Ces deux positions correspondent respectivement à la position d'inversion de poussée connue en anglais sous le terme « reverse » et à la position de mise en drapeau des aubes 30 à calage variable. Le déplacement du corps mobile 54 suivant l'axe longitudinal X entraîne le mouvement du mécanisme de liaison 51, de telle manière que celui-ci engendre le pivotement et le calage des pales des aubes autour de l'axe de calage C.

En référence à la figure 2 et comme nous l'avons annoncé précédemment, la turbomachine 1 comprend un système d'alimentation fluidique 90 permettant de distribuer un fluide vers les différents organes et/ou équipements qui en ont besoin tels que le moyen de commande 52. Le système d'alimentation fluidique 90 comprend une source d'alimentation 91 (ou un réservoir, illustré schématiquement sur la figure 2), une pompe hydraulique 92 permettant de faire circuler le fluide vers les organes et/ou équipements depuis la source d'alimentation 91 et une servovalve 93 permettant de réguler la pression du fluide dans le moyen de commande 52 suivant le calage nécessaire. La servovalve 93 est pilotée électriquement par un calculateur électronique 27 de la turbomachine qui est connu sous le sigle « ECU » pour « Electronic Control Unit ». La source d'alimentation 91 est agencée dans un repère fixe de la turbomachine et de manière générale dans la nacelle entourant la turbomachine 1 ou dans le carter inter-veine 22. La pompe 92 et la servovalve 93 sont également disposées dans le repère fixe de la turbomachine.

La turbomachine 1 comprend un dispositif de transfert 94 de fluide tel que celui représenté sur la figure 1 qui permet le transfert du fluide du repère fixe où se trouve la source d'alimentation, au repère tournant de la turbomachine 1 où se trouve le moyen de commande 52 qui doit être alimenté en fluide. Le dispositif de transfert 94 est agencé ici en amont du réducteur de vitesse 34. L'emplacement du dispositif de transfert de fluide 94 est avantageux car celui-ci permet de faciliter son démontage/montage sans intervenir sur le réducteur de vitesse. Le système d'alimentation 90 comprend également plusieurs tuyaux 95 d'alimentation pour acheminer le fluide vers les organes et/ou équipements. Les tuyaux 95 sont reliés d'une part, à la servovalve 93 et d'autre part, au dispositif de transfert 94, en traversant le porte-satellites 38. Le porte-satellites immobile en rotation autorise le passage des tuyaux à travers celui-ci ainsi qu'à l'intérieur de l'arbre de soufflante 32.

En référence aux figures 1 et 3, le dispositif de transfert 94 est disposé à l'intérieur du moyen de commande 52 avec un espace très faible radialement au niveau d'une interface entre le dispositif de transfert 94 et le moyen de commande 52. L'encombrement est avantageusement réduit en amont où se trouve le moyen de commande 52. Le dispositif de transfert 94 comprend une partie stator 96 et une partie rotor 97. L'une des parties stator et rotor est engagée dans l'autre de manière à réduire l'encombrement et former un ensemble compact facile à monter et démonter. La partie stator 96 est montée de manière solidaire à un stator. Dans l'exemple du dispositif de transfert 94 monté dans le moyen de commande 52, la partie stator 96 est fixée à une structure fixe de la turbomachine, et en particulier au porte-satellites 38 via un équipement statorique.

L'équipement statorique peut comprendre un organe de stator 98 et/ou un élément tubulaire 99. De manière alternative, la partie stator 96 est fixée directement au porte-satellites 38. L'élément tubulaire 99 est configuré de manière à réaliser une « liaison souple » entre la partie stator 96 et le porte-satellites 38. De la sorte, les risques de désalignement et de contraintes entre la partie rotor 97 et la partie stator 96 sont réduits. D'autres systèmes d'alimentation du dispositif de transfert 94 peuvent être envisagés pour permettre des degrés de liberté entre celui-ci et le réducteur de vitesse et accommoder leurs déplacements relatifs.

La partie de stator 96 et l'équipement statorique 98, 99 comportent une interface de fixation destinée à recevoir de manière amovible des organes de fixation 85. L'interface de fixation et les organes de fixation 85 sont configurés pour réaliser une connexion hydraulique et une connexion mécanique de manière simultanée. Plus précisément encore, ceux-ci sont configurés de manière à réaliser une coïncidence, avec étanchéité, d'une canalisation du dispositif de transfert 94 et d'une conduite de l'équipement statorique 98, 99. Le dispositif de transfert 94 comprend au moins un passage 83 permettant l'accès d'un outil de fixation externe pour accéder facilement aux organes de fixation 85.

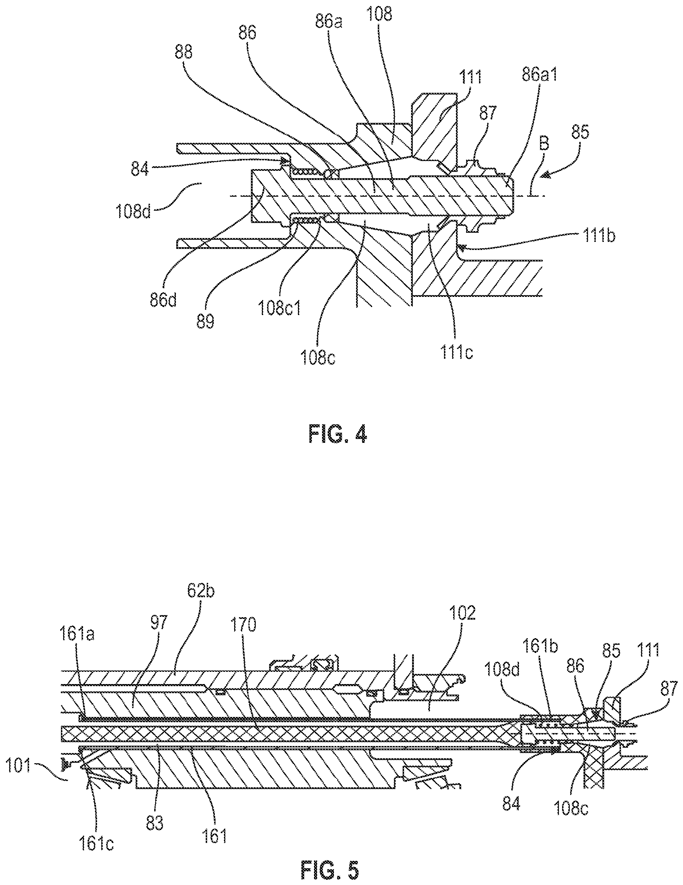

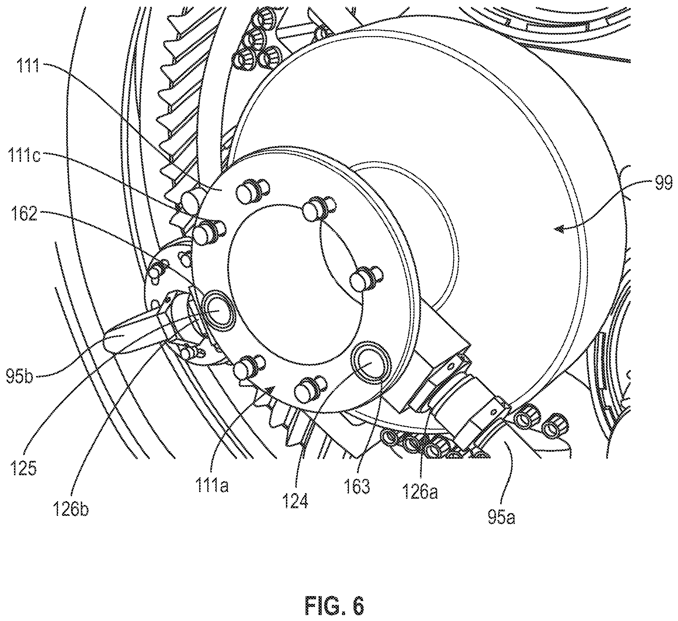

Dans le mode de réalisation des figures 1 et 3, la partie stator 96 est fixée directement à l'élément tubulaire 99 qui présente une forme globalement cylindrique avec un axe de révolution et qui est ici centré sur l'axe longitudinal X. L'élément tubulaire 99 est creux. La partie stator 96 comprend une quatrième bride radiale 108 qui s'étend radialement vers l'extérieur depuis la surface cylindrique externe 103 de la partie stator 96. L'élément tubulaire 99 comprend également une collerette 111 qui s'étend radialement depuis une surface radialement externe de celui-ci. La bride 108 est fixée sur la collerette 111 au moyen des organes de fixation 85 tels que des vis, boulons goujons, etc. A cet effet, la bride 108 comprend une face aval 108b en appui contre une face amont 111a (cf. figure 6), de forme correspondante, de la collerette 111. La bride 108 comprend au moins un trou 108c traversant sa paroi de part et d'autre et ayant chacun un axe parallèle à l'axe longitudinal. La collerette 111 représentée plus précisément sur la figure 4, comprend également au moins un trou correspondant 111c traversant sa paroi de part et d'autre. La bride 108 et la collerette 111 comprennent respectivement plusieurs trous 108c et trous correspondants 111c répartis respectivement autour de l'axe longitudinal X. Lorsque la bride 108 et la collerette 111 sont plaquées l'une contre l'autre, les trous et trous correspondants 108c, 111c sont en regard des uns des autres. Les organes de fixation 85 comprennent des vis 86 qui traversent les trous et trous correspondants et forment une liaison axiale. La bride 108 et la collerette 111 forment l'interface de fixation. Les organes de fixation 85 comprennent également des écrous 87 traversés par les vis 86 pour réaliser le serrage des bride et collerette.

En référence à la figure 4, et de manière avantageuse, les organes de fixation 85 sont imperdables. Dans la présente demande, nous entendons par le terme « imperdable » un élément qui est encore attaché à une première pièce bien que cette pièce ne soit fixée sur une autre deuxième pièce. En particulier, ici les organes de fixation 85 sont attachés ou reliés ou enfermés avec la partie stator ou l'équipement statorique une fois que l'équipement statorique ou la partie stator 96 est démonté(e). Cela permet de fiabiliser le montage/démontage et plus largement la maintenance car cela évite de faire tomber des vis dans les enceintes avec des fluides lors d'une opération de maintenance. Pour cela, les organes de fixation 85 comprennent des moyens de rétention des vis et des écrous sur la bride 108 et la collerette 111. Plus précisément, les écrous 87 sont sertis sur la collerette 111 de l'élément tubulaire 99 et sont disposés en regard du trou correspondant. En particulier, chaque écrou 87 est serti au niveau de la face aval 111b (opposée à la face amont 111a suivant l'axe longitudinal X) de la collerette 111. Les écrous 87 comprennent chacun un filetage interne coopérant avec un filetage externe d'une tige 86a de la vis 86. Chaque vis 86 est retenue dans un trou 108c d'axe B de la partie stator 96 (ici la bride 108) par une bague de retenue 88. Cette dernière présente un axe qui est coaxial avec l'axe du trou 108 (et parallèle à l'axe longitudinal X). Le diamètre externe de chaque bague de retenue 88 est égal ou sensiblement supérieur au diamètre interne du trou 108c. De la sorte, la bague de retenue 88 peut être montée en force ou être ajustée pour éviter que celle-ci ne soit extraite du trou. Alternativement, la bague de retenue 88 est collée dans le trou. De même, le diamètre interne de chaque bague de retenue 88 est sensiblement égal ou supérieur d'environ 0,5 mm au diamètre externe de la tige 86a d'une vis 86. De la sorte, la vis 86 peut traverser et se déplacer aisément à l'intérieur de la bague de retenue 88 lors de son vissage dans l'écrou 87. Suivant une caractéristique avantageuse, mais non limitative, la bague de retenue 88 est bloquée axialement par une saillie annulaire 108c1 qui s'étend vers l'axe du trou. Cependant, l'extrémité libre de la saillie annulaire 108c1 définie un diamètre interne supérieur au diamètre de la tige 86a de la vis 86. Cela permet l'insertion et le retrait de la tige 86a de la vis 86.

Des moyens de mise à l'écart sont également prévus dans au moins un des trou et trou correspondant. Dans cet exemple, les moyens de mise à l'écart comprennent un ressort 89 qui est monté dans chaque trou 108c de la bride 108 de la partie stator 96. Chaque ressort 89 est bloqué en aval axialement par la saillie annulaire 108c1. En d'autres termes, chaque ressort 89 est monté en amont d'une bague de retenue 88. Le ressort 89 est bloqué en amont par la tête de vis 86b. Chaque tête de vis 86b est destinée à être en appui contre une surface de portée 84 entourant le trou 108c. La surface de portée 84 est définie dans un plan perpendiculaire à l'axe longitudinal ou à l'axe B du trou 108c. Chaque vis 86 est mobile entre une position de repos dans laquelle le ressort 89 maintient la tête de vis 86b à l'écart de la surface de portée 84 par sa force de rappel et une position active dans laquelle la tête de vis 86b est en appui contre la surface de portée 86. Dans la position de repos, l'extrémité libre 86a1 de la tige 86a est également maintenue à distance de l'écrou 87 (ou des trous correspondant 111c) grâce au ressort 89 se trouvant dans une position de repos (comme cela est représenté sur la figure 5). Dans la position active, le ressort 89 est comprimé entre la tête de vis 86b et la saillie annulaire 108c1 et l'extrémité libre 86a1 est vissée dans l'écrou 87 serti.

Sur la figure 6, l'élément tubulaire 99 comprend une première conduite 124 et une deuxième conduite 125. La première conduite 124 et la deuxième conduite 125 débouchent dans la face amont 111a (définie dans un plan perpendiculaire à l'axe longitudinal) de la collerette 111. Chaque première et deuxième conduite 124, 125 comprend une entrée en communication fluidique avec la source d'alimentation 91 via les tuyaux 95. L'élément tubulaire 99 comprend pour cela un premier port 126a qui s'étend depuis la surface cylindrique externe de l'élément tubulaire 99 et qui est connecté à une extrémité du premier tuyau 95a. L'élément tubulaire 99 comprend également un deuxième port 126b qui s'étend depuis la surface cylindrique externe de celle-ci et qui est connecté au deuxième tuyau 95b. Les conduites 124, 125 débouchent dans la face amont 111a via des orifices qui forment la sortie de celles-ci.

Par ailleurs, l'élément tubulaire 99 est creux. Son diamètre interne est sensiblement égal ou supérieur au diamètre externe de l'organe de stator 98. Le diamètre externe de l'organe de stator 98 est délimité par une surface externe 110. De la sorte, l'alésage interne de l'élément tubulaire 99 est assez grand pour permettre l'accès à un écrou de ligne d'arbre situé en aval au niveau du réducteur de vitesse 34. Le diamètre interne de l'alésage interne de l'élément tubulaire 99 est suffisant pour laisser passer un outillage utilisé pour monter et serrer cet écrou après démontage du dispositif de transfert 94.

En référence à la figure 1, la partie stator 96 présente une forme globalement cylindrique et un axe de révolution qui est centré sur l'axe longitudinal X. Plus précisément, la partie stator 96 s'étend entre une première extrémité 96a et une deuxième extrémité 96b suivant l'axe longitudinal X. La partie stator 96 s'étend également entre la partie rotor 97 et l'organe de stator. La partie stator 96 est destinée à s'engager dans (à l'intérieur de) la partie rotor 97. La partie rotor 97 est mobile en rotation autour de la partie stator 96 suivant l'axe longitudinal. La partie stator 96 une fois montée à l'intérieur de la partie rotor 97 forme un ensemble (ou une cartouche) qui est monté dans le moyen de commande 52. A cet effet, la partie rotor 97 présente une forme cylindrique d'axe coaxial avec l'axe longitudinal X. La partie rotor 97 s'étend suivant l'axe longitudinal X entre une face amont 97a et une face aval 97b. La partie rotor 97 est traversée de part et d'autre par un alésage central 100 suivant l'axe longitudinal. L'alésage central 100 débouche d'une part, dans une première cavité 101 ouverte dans la face amont 96a et d'autre part, dans une deuxième cavité 102 ouverte dans la face aval 97b. La partie stator 96 est engagée dans l'alésage central 100. La première extrémité 96a de la partie stator 96 est agencée dans la première cavité 101 tandis que la deuxième extrémité 96b est agencée à l'extérieur de l'alésage central 100 et de la deuxième cavité 102. En d'autres termes, la deuxième extrémité 96b s'étend également à l'extérieur de la partie rotor 97.

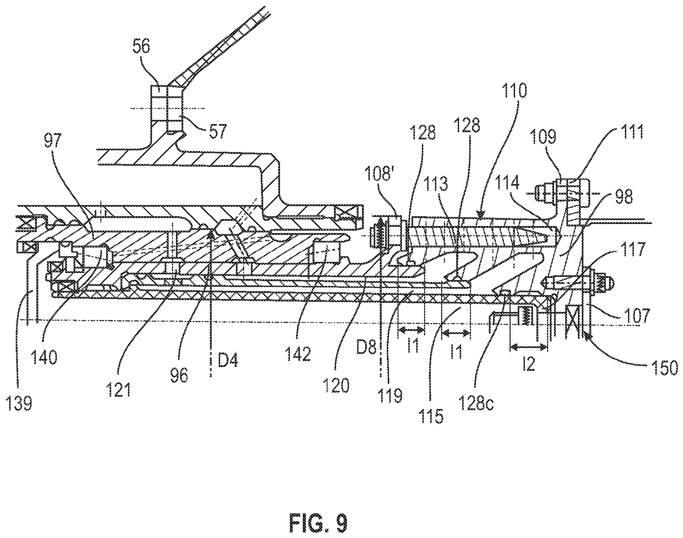

La partie stator 96 comprend une surface cylindrique externe 103 de forme complémentaire avec une surface cylindrique interne 104 de l'alésage central 100. Le diamètre externe de la surface cylindrique externe 103 est sensiblement égal au diamètre interne de la surface cylindrique interne 104 (tout en permettant la rotation de la partie rotor 97 autour de la partie stator 96). Plus précisément, un espace très faible sépare la partie rotor et la partie stator 97. Cet espace est connu par la dénomination « entrefer ». L'entrefer forme également la première interface entre la surface cylindrique externe 103 de la partie stator 96 et la surface radialement interne 104 de la partie rotor 97. Des fuites peuvent intervenir à l'endroit de cet entrefer ou interface. Ces fuites sont dues aux côtes des parties stator et rotor 96, 97 pour faciliter les montages et démontages et aussi de fonctionnement entre la partie stator 96 et la partie rotor 97. A noter que l'espace très faible (environ 0,1 mm, voire inférieure à 0,1 mm) limite les fuites de fluide. Comme cela est illustré, la partie stator 96 comprend une première section avec un diamètre externe et une deuxième section avec un diamètre externe. Suivant une caractéristique non limitative, la deuxième section présente un diamètre supérieur à celui de la première section. En d'autres termes, l'alésage central 100 est étagé et comprend des diamètres différents également. Bien entendu, l'alésage peut présenter le même diamètre sur toute sa longueur comme cela est représenté sur la figure 9.

La partie stator 96 telle qu'illustrée sur les figures 1 et 3 est formée de deux tubes cylindriques dénommés ci-après premier tube 960 cylindrique et deuxième tube 961 cylindrique. Les premier et deuxième tubes 960, 961 sont creux. Le premier tube 960 présente deux sections de diamètres externes différents. Le premier tube 960 comprend un alésage interne 115 dont l'axe est coaxial avec l'axe longitudinal (ou l'axe du moyen de commande 52). L'alésage interne 115 comprend un fond 115g et débouche dans un lamage formé dans la face aval 108b. En particulier, l'alésage interne 115 est étagé ou à sections radiales différentes suivant l'axe longitudinal. Le premier tube 960 comprend un premier alésage cylindrique 115a avec un premier diamètre, un deuxième alésage cylindrique 115b avec un deuxième diamètre et un troisième alésage cylindrique 115c avec un troisième diamètre. Le premier alésage 115a débouche dans le deuxième alésage 115b et ce dernier débouche dans le troisième alésage 115c.

La partie stator 96 comprend deux passages de raccordement 115d, 115e qui débouchent chacun d'une part, dans l'alésage interne 115 et notamment au niveau du troisième alésage 115c et d'autre part, respectivement dans une première ouverture 158 et une deuxième ouverture 152 au niveau de la face aval 108b. Ces ouvertures 152, 158 débouchent dans la face aval 108b.

Le deuxième tube 961 comprend une semelle 961b depuis laquelle s'étend une paroi cylindrique 961a. Le deuxième tube 961 comprend un embout ouvert 961c (opposé à la semelle 961b) dans laquelle débouche une cavité interne longitudinale. L'embout ouvert 961c est délimité par l'extrémité libre de la paroi cylindrique 961a. Le deuxième tube 961 est installé de manière étanche dans le premier tube 960 et dans l'alésage interne 115 de manière que la cavité interne longitudinale soit coaxiale avec l'alésage interne 115. La semelle 961b est logée dans le lamage de la face aval 108b et présente une complémentarité de forme avec celui-ci. La semelle 961b présente également une face 961b1 ayant une continuité de surface avec la face aval 108b.

Le deuxième tube cylindrique 961 comprend en outre un perçage radial 961d débouchant sur la surface externe de la paroi cylindrique 961a. Le perçage radial 961d est disposé en regard d'une sortie d'un passage de raccordement 115e (en situation d'installation). La paroi cylindrique 961a du tube cylindrique 961 présente un diamètre externe qui est sensiblement égal au diamètre du deuxième alésage 115b mais inférieur au diamètre du troisième alésage 115c. De la sorte, un espace annulaire est formé entre la surface externe du deuxième tube cylindrique 961 et la surface interne de l'alésage 115c.

La partie rotor 97 est montée rotative par rapport à la partie stator 96 au moyen de paliers. Un premier palier 140 est disposé précisément dans la première cavité 101 dans laquelle débouche l'alésage central 100 accueillant la première extrémité 96a de la partie stator 96. Le premier palier 140 est à roulements. Celui-ci comprend une bague interne qui est portée par la surface cylindrique externe 103 de la partie stator 96 et une bague externe qui est portée par la surface cylindrique interne 104 de la partie rotor 97. La bague externe est bloquée axialement par une portée cylindrique. La bague interne est bloquée axialement part un écrou interne 141. Ce dernier est monté sur la partie stator 96 et comprend un filetage interne coopérant avec un filetage externe de la surface cylindrique externe 103 de la partie stator 96. Un deuxième palier 142 est disposé dans la deuxième cavité 102 dans laquelle débouche l'alésage central 100 de la partie stator 96. Le deuxième palier 142 est également un palier à roulements. Ce palier 142 est monté en aval du premier palier 140. Le deuxième palier 142 comprend une bague interne et une bague externe. La bague externe est portée par la surface cylindrique interne 104 de la partie rotor 97, au niveau de la deuxième cavité 102 et est bloquée axialement en amont par une portée cylindrique. La bague interne est portée par la surface cylindrique externe 103 de la partie stator 96 et est bloquée en aval par une portée cylindrique de la partie stator 96. Dans le présent exemple, les éléments roulants des paliers 140 et 142 sont des rouleaux coniques avec une précharge axiale. De manière alternative, les éléments roulants sont des billes à contact oblique et en particulier avec une précharge axiale. De tels roulements permettent de réduire au minimum l'espace entre la surface radialement interne de la partie stator 96 et la surface radialement externe de la partie rotor 97. Ces roulements garantissent cependant un espace (le non contact) (espace minimal) pour éviter le contact métal/métal pour éviter les fuite de fluides.

Suivant une autre alternative, non représentée, des moyens d'étanchéité tels que des joints ou des segments sont placés à la première interface. Dans ce cas, les éléments roulants des paliers sont sans contact oblique.

De même, le diamètre externe du deuxième palier 142 est supérieur au diamètre externe du premier palier 140. Cependant, le diamètre externe du deuxième palier 142 est inférieur au diamètre interne de la paroi 62b du moyen de commande 52. De la sorte, le diamètre de ce palier est plus faible que ceux des paliers de l'art antérieur. Cela permet de réduire davantage l'espace ou le jeu ce qui permet de limiter les risques de fuite de fluide. Cet agencement permet également de limiter le cisaillement du fluide qui réduit son échauffement et d'autre part, de diminuer les besoins d'évacuation des calories. Par ailleurs, le diamètre D4 du dispositif de transfert de fluide est ici inférieur au diamètre du moyen de commande ce qui permet de décontraindre le diamètre des premier et deuxième paliers. De manière alternative, les diamètres externes des premier et deuxième paliers sont sensiblement identiques.

Comme cela est illustré sur les figures 1 et 3, le dispositif de transfert 94 comprend un capot d'étanchéité 139, annulaire, monté dans la première cavité 101. Le capot d'étanchéité 139 est configuré de manière à fermer de manière étanche la première cavité 101. Cela évite ainsi la communication entre l'intérieur du dispositif de transfert 94 et une enceinte en amont de celui-ci. Pour cela, le capot d'étanchéité 139 comprend un corps creux 139a qui est visible plus précisément sur la figure 3 et qui présente, suivant une coupe axiale, une forme en C ou sensiblement tronconique. Le capot d'étanchéité 139 comprend une patte annulaire 139b qui est reliée au corps creux 139a et qui est destinée à être en butée contre une saillie annulaire 147 (visible sur la figure 3) prévue dans la cavité 101. La saillie annulaire 147 est portée par la partie rotor 97 et s'étend radialement vers l'axe de la partie rotor 97. Avantageusement, un élément d'étanchéité est installé dans une gorge annulaire de la saillie annulaire 147. L'élément d'étanchéité est situé axialement entre la patte annulaire 139b et la saillie annulaire 147 pour garantir l'étanchéité du capot 139. La patte annulaire 139b est bloquée axialement par un organe de blocage axial 148. Ce dernier est ici un écrou. Le capot d'étanchéité 139 est monté en amont du premier palier de guidage 140. Le capot d'étanchéité 139 est également agencé en amont de la première extrémité 96a de la partie stator 96. De la sorte, le fluide de lubrification du palier est contenu dans le dispositif de transfert 94 et le capot 139 délimite une partie de l'enceinte 35. Dans la présente demande, le fluide de lubrification (des organes de la turbomachine tels que les paliers/roulements) est identique au fluide qui alimente le moyen de commande 52.

Comme énoncé précédemment, le dispositif de transfert 94 (tel qu'illustré sur les figures 1 à 9) est monté dans le moyen de commande 52 et plus particulièrement dans la portion tubulaire 62b, creuse et de manière étanche. La partie de rotor 97 comprend une surface cylindrique externe 129 qui est sensiblement complémentaire avec une surface radialement interne 134 de la portion tubulaire 62b. Le diamètre externe de la partie rotor délimitée par la surface 129 (qui est aussi le diamètre externe D4 du dispositif de transfert de fluide) est sensiblement égal (au jeu de montage près) au diamètre interne de la portion tubulaire 62b. De même, la partie rotor 97 présente une longueur sensiblement égale à la longueur de la portion tubulaire. En situation d'installation, les plans passant par les extrémités amont et aval 97a, 97b de la partie rotor 97 sont respectivement coplanaires ou à l'intérieur des plans passant par les première et deuxième extrémités de la portion tubulaire 62b. En revanche, la première extrémité 96a de la partie stator 96 est à l'intérieur de la portion tubulaire 62b et la deuxième extrémité 96b est à l'extérieur de la portion tubulaire 62b. La deuxième extrémité 96b est à l'extérieur de la portion tubulaire 62b.

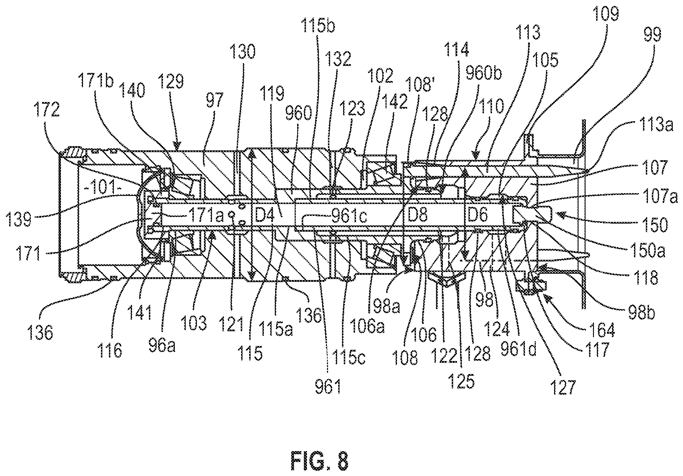

Sur la figure 3, un organe de serrage 135 permet de maintenir solidement la partie rotor 97 sur le moyen de commande 52, dans la portion tubulaire 62b et de réaliser un blocage axial. L'organe de serrage 135 comprend ici un écrou qui est centré sur l'axe longitudinal X et qui est monté à l'intérieur du corps principal 62a. En particulier et sur les figures 7a et 8, l'écrou comprend un filetage externe qui s'engage avec un filetage interne d'une paroi du moyen de commande. L'écrou est également en butée axiale contre une bordure annulaire de la partie rotor 97, au niveau de la première extrémité 97a. La bordure annulaire délimite la première cavité 101 de la partie rotor 97. De manière alternative (cf. figure 1), l'écrou comprend un filetage interne qui s'engage avec un filetage externe portée par une surface radialement externe d'une jupe cylindrique 151 de la partie rotor. La jupe cylindrique 151 s'étend suivant l'axe longitudinal et prolonge vers l'amont la partie rotor 97. L'écrou est agencé en butée axiale contre une paroi radiale (telle un épaulement 64) du moyen de commande 52. Une telle fixation permet de monter/démonter aisément le dispositif de transfert 94. Suivant une autre alternative représentée sur les figures 5 à 8, l'écrou comprend un filetage externe qui s'engage avec un filetage interne porté par une surface radialement interne d'une extension de la portion tubulaire 62b vers l'amont. Dans ce cas de figure, l'écrou est agencé en butée axiale contre une bordure annulaire de la partie rotor 97.

Le dispositif de transfert 94 comprend de manière avantageuse des moyens en communication fluidique d'une part avec la source d'alimentation et d'autre part avec le moyen de commande. La partie stator 96 comprend au moins une canalisation qui s'étend dans l'épaisseur de celle-ci. Sur la figure 1, la partie stator 96 comprend une première canalisation 119 et une deuxième canalisation 120 qui sont distinctes l'une de l'autre. Au moins une portion de la deuxième canalisation 120 s'étend radialement à l'extérieur de la première canalisation 119. La première canalisation 119 s'étend suivant l'axe longitudinal suivant une majeure partie et débouche dans la face aval 108b (s'étendant dans un plan perpendiculaire à l'axe longitudinal X) de la bride de la partie stator 96. La première canalisation 119 est destinée à être en communication fluidique avec la première conduite 124 de l'élément tubulaire 99. La première canalisation 119 est formée au moins en partie par l'alésage interne 115 cylindrique. En particulier, la première canalisation 119 est formée par une l'alésage interne 115 du premier tube 960, de la cavité interne du deuxième tube 961 et du passage de raccordement 115e. La deuxième canalisation 120 s'étend suivant l'axe longitudinal suivant une partie et débouche également sur la face aval 108b de la partie stator 96. La deuxième canalisation 120 est destinée à être en communication fluidique avec la deuxième conduite 125 de l'élément tubulaire 99. La deuxième canalisation 120 est formée par l'espace annulaire formé entre la surface externe du tube cylindrique et la surface interne de l'alésage 115c et du passage de raccordement 115c.

En référence à la figure 6, des moyens d'étanchéité sont prévus entre la bride 108 et la collerette 111 pour prévenir tout risque de fuite. En particulier, des joints d'étanchéité 162 annulaires sont disposés respectivement dans des gorges 163 ménagées dans la face amont 111a. Chaque gorge 163 entoure un orifice de sortie des conduites 124, 125. La fixation de la bride 108 et de la collerette 111 permet la mise en compression des joints 162 ce qui garantit une connexion étanche. En effet, les orifices de sortie des conduites 124, 125 sont en communication fluidique avec les première et deuxième ouvertures 158, 152 lorsque la bride et la collerette 111 sont en appui l'une contre l'autre. De manière alternative, un unique joint annulaire est disposé sur la face amont 111a de la collerette. Ce joint unique peut occuper toute la surface ou être formé sous la forme d'une bande annulaire.

La partie stator 96 comprend avantageusement des premiers orifices 121 traversant sa paroi de part et d'autre suivant l'axe radial. Ces premiers orifices 121 sont formés en amont de la partie stator 96. Les orifices 121 sont ménagés dans le premier tube 960 de la partie stator 96 et où se trouve le premier alésage 115a. La première canalisation 119 débouche dans ces premiers orifices 121 qui forment la sortie de celle-ci. L'entrée de la première canalisation 119 est formée par la première ouverture 158 de la partie stator. Quant à la deuxième canalisation 120, celle-ci est disposée radialement à l'extérieur de la première canalisation 119. La deuxième canalisation 120 est annulaire et disposée de manière coaxiale avec l'axe longitudinal X. La deuxième canalisation 120 débouche dans la deuxième ouverture 152. La deuxième ouverture 152 forme l'entrée de la deuxième canalisation 120. La partie stator 96 comprend également des deuxièmes orifices 123 qui sont formés dans la paroi de celle-ci. Les deuxièmes orifices 123 traversent la paroi de part et d'autre suivant l'axe radial. Ceux-ci sont ménagés dans le deuxième tube 961 de la partie stator et au niveau du troisième alésage 115c. La deuxième canalisation 120 débouche d'autre part dans ces orifices 123 qui forment la sortie. Ces premier et deuxième orifices 121, 123 débouchent sur la surface cylindrique externe 103 de la partie stator 96. Les premiers et deuxièmes orifices 121, 123 sont décalés suivant l'axe longitudinal. Les premiers orifices 121 sont agencés en amont des deuxièmes orifices 123.

L'interface de fixation permet de réaliser les connexions hydrauliques entre les canalisations 119, 120 de la partie stator 96 et les conduites 124, 125 de l'élément tubulaire 99, ainsi que les connexions mécaniques en fixant la bride 108 sur la collerette 111.

En référence aux figures 1, 3 et 7, le passage 83, permettant l'accès aux organes de fixation 83 traverse le dispositif de transfert 94 de part et d'autre suivant un axe parallèle à l'axe longitudinal. Le passage 83 présente une section circulaire. Bien entendu le passage 83 peut présenter une autre forme de section. L'axe du passage 83 est coaxial avec l'axe des organes de fixation 85 assurant une liaison axiale (ou l'axe des trous correspondant 111c). Dans cet exemple, le dispositif de transfert 94 comprend plusieurs passages 83 formés dans la partie rotor 97 et qui sont répartis régulièrement autour de l'axe longitudinal. Ici, il y a autant de passage 83 que d'organes de fixation. Bien entendu, un seul passage 83 suffirait pour accéder aux organes de fixation 85 vu que la partie rotor 97 tourne par rapport à la partie stator 96 qui comprend la bride 108 à fixer. Chaque passage 83 débouche d'une part, dans la face amont 97a et d'autre part, dans la face aval 97b. Chaque passage 83 s'étend radialement à l'extérieur de l'alésage central 100 de la partie rotor 97.

Sur la figure 5, l'outil de fixation externe 170 est inséré dans un des passages 83 et atteint la vis 86 correspondante afin de pouvoir visser la vis dans l'écrou 87 et fixer la bride 108 et la collerette 111 ou dévisser la vis de l'écrou 87 pour désolidariser la bride 108 de la collerette 111. Un fourreau 161, creux, est installé de manière amovible dans chaque passage 83. Ce fourreau 161 permet de guider le l'outil de fixation externe 170, dans le passage 83, vers les organes de fixation 85. Le fourreau 161 permet également de caler angulairement la partie rotor 97 avec la partie stator 96. Pour cela, chaque fourreau 161 est allongé entre une première extrémité 161a et une deuxième extrémité 161b suivant un axe qui est parallèle à l'axe à l'axe du passage en situation d'installation. La deuxième extrémité 161b est logée dans un lamage 108d de la partie stator 96. Le lamage 108d est coaxial avec le trou 108c et débouche aussi dans le trou 108c. La deuxième extrémité 161b est en particulier en appui contre la surface 84 formant le fond du lamage 108d. Le fourreau 161 comprend à sa première extrémité 161a une collerette 161c qui s'étend radialement vers l'extérieur et qui est en butée contre la face amont 97a de la partie rotor 97 (en situation d'installation). Ainsi une fois installé entre la bride et partie rotor 97, le fourreau 161 prévient la rotation de la partie rotor 97. Le fourreau 161 présente un diamètre externe sensiblement égal ou inférieur au diamètre du passage 83 de manière à garantir le maintien du fourreau 161 dans le ou les passages. De manière avantageuse, le fourreau 161 est réalisé en matière plastique ce qui évite de détériorer la partie rotor 97.

Suivant une caractéristique avantageuse, le diamètre radialement externe D4 de la partie rotor 97 est supérieur au diamètre défini par l'axe B du trou 108c d'axe B de la bride radiale 108 de la partie stator 96. Comme nous l'avons vu précédemment l'axe de chaque passage 83 est coaxial à un trou correspondant 111c. Cela implique que lors du montage, la partie stator 96 soit montée à l'intérieur de la partie rotor 97 avant que la partie stator 96 ne soit fixée à son tour sur l'élément tubulaire 99 avec les organes de fixation 85 via le ou les passage(s) 83. De même, lors du démontage du dispositif de transfert 94, les organes de fixation 85 sont d'abord extraits pour la désolidarisation de la bride 108 et de la collerette 111, avant de pouvoir extraire le dispositif de transfert 94 (partie stator et partie rotor) de l'organe de turbomachine.

Sur la figure 1 et la figure 8, la partie rotor 97 comprend en outre des canaux (représentés en pointillés sur la figure 1) qui débouchent d'une part dans l'alésage central 100 et d'autre part dans la surface cylindrique externe 129. Ces canaux sont connectés fluidiquement avec les canalisations 119, 120 de la partie stator 96. Les canaux comprennent au moins un premier canal 130 qui s'étend suivant l'axe radial et dans l'épaisseur de la paroi de la partie rotor 97. Au moins un deuxième canal 131 s'étend également suivant l'axe radial et dans l'épaisseur de la partie rotor 97. Lorsque la partie stator 96 est montée dans l'alésage central 100, les premiers orifices 121 sont disposés à la même position axiale que le premier canal 130. De même, les deuxièmes orifices 123 sont disposés à la même position axiale que le deuxième canal 131. Les canaux 130, 131 sont également en communication fluidique avec les moyens d'alimentation d'un organe de la turbomachine (ici le moyen de commande 52). Les premier et deuxième paliers 140, 142 sont disposés de part et d'autre axialement des canaux 130, 131. Les paliers 140, 142 de part et d'autre permettent de maintenir un entrefer précis qui permet de faire l'étanchéité hydrostatique. Un autre moyen d'étanchéité est bien entendu envisageable. Dans cet exemple, le premier palier 140 est monté en amont du premier canal 130. Le deuxième palier 142 est monté en aval du deuxième canal 131.

Comme cela est visible également sur la figure 3, deux rainures ou gorges 137, 138 annulaires sont formées dans la surface cylindrique externe 129 de la partie de rotor 97. Ces rainures 137, 138 sont distinctes l'une de l'autre. Ces rainures 137, 138 sont ouvertes sur l'extérieur de la partie rotor 97 et sont formées de manière parallèle. La première rainure 137 est alignée axialement avec le premier canal 130. Ce dernier débouche ainsi dans la première rainure 137. De même, la deuxième rainure 138 est alignée axialement avec le deuxième canal 131. Le deuxième canal 131 débouche ainsi dans la première rainure 137. La largeur des rainures (suivant l'axe longitudinal) est différente, et dans le présent exemple, la largeur de la première rainure 137 est supérieure à celle de la deuxième rainure 138. De manière avantageuse, la surface radialement interne du moyen de commande 52 comprend des rainures 143, 144 annulaires de formes correspondantes à celles des rainures 137 et 138. Au moins une des rainures 137, 138 est en regard d'une des rainures 137, 138 correspondante de manière à canaliser les flux de fluide ponctuels en un flux commun. En particulier, en situation d'installation, une troisième rainure 143 est alignée axialement avec la première rainure 137 tandis que la quatrième rainure 144 est alignée axialement avec la deuxième rainure 138.

En référence à la figure 3, la surface cylindrique interne 104 de la partie rotor 97 comprend également des rainures 145, 146 annulaires qui sont ouvertes vers l'intérieur de celle-ci. Les rainures 146, 145 sont distinctes l'une de l'autre. Les rainures 145 et 146 sont respectivement alignées avec les rainures 137, 138. Le diamètre interne de la rainure 146 ou le fond de celle-ci est radialement plus éloigné vers l'extérieur que le diamètre ou le fond de la rainure 145. Le premier canal 130 débouche également dans la cinquième rainure 145. Le deuxième canal 131 débouche dans la sixième rainure 146. La largeur des rainures 145, 146 suivant l'axe longitudinal sont sensiblement identiques.

Les figures 7a à 7d illustrent quelques étapes d'un procédé de montage d'un dispositif de transfert de fluide dans un organe de turbomachine. En particulier, le procédé de montage comprend une étape d'assemblage du dispositif de transfert 94. Cette étape d'assemblage comprend l'insertion ou l'engagement de la partie stator 96 dans la partie rotor 97. La partie stator 96 engagée dans la partie rotor 97, a sa deuxième extrémité 96b qui s'étend à l'extérieur de la partie rotor 97 avec la bride 108. La partie stator 96 est montée de l'aval vers l'amont dans la partie rotor 97. Le pré-montage du dispositif de transfert 94 présente l'avantage de bien maitriser le montage d'éléments considérés comme fragiles tels que les joints, les paliers de roulements, zone d'entrefer, et de pouvoir tester le niveau des fuites à la fin de l'assemblage et donc de livrer un ensemble fiable.

L'étape d'assemblage comprend une sous-étape de mise en place d'au moins une partie des organes de fixation 85. L'écrou 87 est serti sur la collerette 11. Cette étape peut avoir lieu avant l'assemble du dispositif de transfert 94. Les vis 86 sont montées sur la bride 108.

Le procédé comprend ensuite une étape de fixation du dispositif de transfert 94 de fluide sur le moyen de commande 52. Cette étape comprend une sous étape d'intégration dans laquelle le dispositif de transfert 94 est monté à l'intérieur du moyen de commande 52. En particulier, la partie rotor 97 (avec la partie stator 96) est engagée ou insérée dans la portion tubulaire 62b et l'organe de serrage 135 est monté en aval de celui-ci pour le bloquer axialement. Les joints d'étanchéité sont déjà installés dans les gorges ménagées dans la surface radialement externe 129 prévues à cet effet. L'insertion se réalise de l'amont vers l'aval. La deuxième extrémité 96b de la partie stator 96 s'étend en aval du moyen de commande 52. Nous pouvons voir sur la figure 7a que le diamètre externe D5 de la bride 108 est inférieur au diamètre D4 de la partie rotor 97 (et du diamètre interne de la portion tubulaire 62b). Cela implique que les organes de fixation 85 montés sur la bride 108 au moins en partie ne sont pas accessibles une fois que le dispositif de transfert 94 est monté à l'intérieur du moyen de commande 52. En particulier, en regardant vers l'amont, les vis 86 ne sont visibles que via les passages 83. Nous comprenons de cela et des figures que les organes de fixation 85 sont placés en aval du dispositif de transfert.

Le procédé comprend également une étape d'insertion du fourreau 161 dans chaque passage 83. Le fourreau 161 est introduit jusqu'à ce que sa deuxième extrémité 161b soit à l'intérieur du lamage 108d de la bride 108. Cette étape peut être réalisée avant l'étape de fixation du dispositif 94 dans le moyen de commande 52 ou ultérieurement.

Le procédé comprend une étape de mise en place du moyen de commande 52 équipé du dispositif de transfert 94 dans l'organe de turbomachine (ici le rotor de soufflante). L'ensemble est déplacé de l'amont vers l'aval de façon à ce qu'au moins les brides 56 et 57 coopèrent ainsi que la bride 108 et la collerette 111.

En référence à la figure 7a, le procédé comprend une étape de fixation de l'interface de fixation de la partie stator 96 et de l'équipement statorique au moyen des organes de fixation 85 de manière à réaliser une coïncidence, avec étanchéité, de la canalisation du dispositif de transfert 94 et de la conduite de l'équipement statorique. En particulier, cette étape comprend une sous étape d'accostage de la deuxième extrémité 96b de la partie stator 96 sur l'organe de stator 98. Lors de cette étape, les interfaces de fixation sont reliées. Les connexions hydrauliques et mécaniques du dispositif de transfert 94 avec l'organe de stator 98 ont lieu également lors de cette étape. En effet, en déplaçant le dispositif de transfert 94 vers l'aval, la bride 108 vient en appui contre la collerette 111 comme représenté sur la figure 7b. La bride 56 du moyen de commande 52 est également en appui contre la bride 57 de l'arbre de soufflante 32. Cela est possible car le diamètre externe D5 de la bride 108 est inférieur au diamètre interne D7 de la bride 57. Le diamètre externe D1 de la bride 56 est également inférieur au diamètre D2 défini par le mécanisme de liaison 51. Une partie de la paroi cylindrique 63a du moyen de commande 52 ainsi que la deuxième extrémité 96b de l'organe de stator 96 s'étend à l'intérieur de l'arbre de soufflante 32.

Sur la figure 7c, l'étape de fixation comprend une sous étape d'insertion de l'outil externe 170 dans au moins le passage 83 du dispositif de transfert 94 pour accéder aux organes de fixation 85. En particulier, l'outil externe 170 est inséré dans le passage 83 pour serrer la vis 86 dans l'écrou 87 serti de la collerette 111. Le guidage de l'outil externe est facilité grâce au fourreau 161. Cette action est répétée pour chaque vis 86 et écrou 97. Simultanément, le moyen de commande 52 est fixé à l'arbre de soufflante 32 via les brides 56, 57, 60. La bride 56 du moyen de commande 52 est en appui avec la bride 57 et les organes de fixation 79 permettent de fixer les brides ensemble. Le procédé comprend une étape de retrait de l'outil externe 170 et aussi une étape de retrait du fourreau 161 du ou des passages 83. L'étape de retrait du fourreau 161 a lieu avantageusement après l'étape de retrait de l'outil externe 170.

Le procédé de démontage comprend les étapes de montage de manière inversée. Lors du démontage, l'organe de stator 98 peut rester fixé à la structure fixe de la turbomachine. Le moyen de commande 52 peut également rester fixé à l'arbre de soufflante 32.

Suivant un autre mode de réalisation illustré sur la figure 8, le dispositif de transfert 94 comprend également une partie stator 96 installée au moins en partie dans (à l'intérieur) de la partie rotor 97. Dans ce mode de réalisation, les éléments identiques ou sensiblement identiques et/ou avec les mêmes fonctions sont représentés par les mêmes références numériques que ceux du mode décrit précédemment. La partie rotor 97 tourne autour de la partie stator 96 grâce aux premier et deuxième paliers 140, 142. La partie stator 96 s'étend entre la partie rotor 97 et l'organe de stator 98 suivant l'axe longitudinal. La deuxième extrémité 96b de la partie stator 96 s'étend également à l'extérieur de la partie rotor 97, mais aussi à l'extérieur de la cavité 102. Dans cet exemple de réalisation, la partie stator 96 est emmanchée de manière étanche au moins en partie dans un organe de stator 98 de l'équipement statorique (lequel est fixé à la structure fixe ici de la turbomachine). L'organe de stator 98 est fixé à l'élément tubulaire 99 qui est creux et qui est fixé également au porte-satellites 38. En particulier, l'organe de stator 98 est agencé axialement entre l'élément tubulaire 99 et le dispositif de transfert 94. Le diamètre radialement externe D4 de la partie rotor 97 est supérieur ou égal au diamètre externe de l'organe de stator 98 délimité par la surface 110. L'organe de stator 98 est également allongé suivant l'axe longitudinal entre une face amont 98a et une face aval 98b. L'organe de stator 98 comprend une cavité d'ancrage 105 qui s'étend à l'intérieur de l'épaisseur de l'organe de stator 98. Cette cavité d'ancrage 105 est destinée à recevoir la deuxième extrémité 96b de la partie stator 96. La cavité d'ancrage 105 débouche dans une ouverture 106 définie dans la face amont 98a. Cette dernière est définie dans un plan qui est perpendiculaire à l'axe longitudinal. Le bord de l'ouverture 106 comprend un chanfrein 106a qui permet de faciliter l'insertion ou l'emmanchement de manière étanche et en aveugle de la deuxième extrémité 96b de la partie stator 96 en aveugle dans la cavité d'ancrage 105. En effet, la deuxième extrémité 96b de la partie stator 96 est montée en aveugle dans l'organe de stator 98.

De manière avantageuse, le chanfrein 106a forme un angle avec le plan de la face amont 98a (et/ou avec l'axe longitudinal). Cet angle peut être compris entre 10 et 45° par rapport à l'axe longitudinal. Le chanfrein 106a est incliné vers l'intérieur de la cavité d'ancrage 105 et vers l'axe de révolution de l'organe de stator 98. Cela favorise l'insertion de la deuxième extrémité 96b dans la cavité 105. En particulier, la deuxième extrémité 96b de la partie stator 96 forme sensiblement une portion de cône (portion femelle) qui rentre dans une autre portion de cône (portion mâle) afin d'obtenir un guidage facile et une bonne orientation. La cavité d'ancrage 105 comprend également un fond 107 qui est situé à l'opposé de l'ouverture 106 suivant l'axe longitudinal X.

La partie stator 96 comprend également une bride radiale 108' qui s'étend radialement vers l'extérieur depuis sa surface cylindrique externe 103. La face aval 108b est en regard de la face amont 98a de l'organe de stator 98 lorsque la deuxième extrémité 96b de la partie stator est engagée dans la cavité d'ancrage 105. L'organe de stator 98 comprend également une bride radiale 109 qui s'étend radialement vers l'extérieur depuis la surface externe 110 de l'organe de stator 98. Cette bride radiale 109 est fixée à la collerette 111 annulaire de l'élément tubulaire 99 via des organes de fixation 164 tels que des pions ou encore des vis et écrous.

Sur la figure 8, l'alésage interne 115 de la partie stator 96 débouche de part et d'autre de celle-ci suivant l'axe longitudinal. L'alésage interne 115 débouche dans une troisième ouverture 116 et dans une quatrième ouverture 118. Comme pour le premier mode de réalisation, l'alésage interne 115 est formé par le premier tube 960 et par le deuxième tube 961. Le deuxième tube 961 creux est installé de manière étanche dans le premier tube 960. La cavité interne du tube 961 est coaxiale avec l'axe du premier alésage 115a et en communication avec le premier alésage 115a. Ce dernier débouche dans la troisième ouverture 116 au niveau de la première extrémité 96a. Dans cet exemple, un bouchon 171 est configuré de manière de fermer cette troisième ouverture 116. Le bouchon 171 comprend un doigt 171a agencé à l'intérieur de l'alésage. Un joint d'étanchéité 172 annulaire est monté autour de ce doigt 171a et en contact avec la surface interne de la partie stator 96 (l'alésage) afin d'éviter les fuites de fluide vers l'extérieur de la partie stator 96 via la troisième ouverture 116. Le bouchon 171 comprend une collerette 171b qui coiffe la surface externe de la première extrémité 96a de la partie rotor 97. La bordure de la collerette 171 vient en appui avec la bague interne du premier palier 140. Le capot 139 est monté en amont du bouchon 171 et en amont du premier palier 140.

Le tube 961 comprend une paroi 117 sous forme de disque et qui forme le fond du tube 961. En situation d'installation, la paroi 117 est disposée à l'opposé de la troisième ouverture 116 (et du bouchon 171) suivant l'axe de l'alésage interne 115. La quatrième ouverture 118 est formée dans la paroi 117 et traverse celle-ci de part et d'autre suivant l'axe longitudinal X. L'axe de la quatrième ouverture 118 est coaxial avec l'axe de l'alésage interne 115. La première canalisation 119 est formée au moins en partie par l'alésage interne 115. La première canalisation 119 débouche dans les premiers orifices 121 qui forment la sortie de celle-ci. L'entrée de la première canalisation 119 est formée par le perçage radial 961d du tube 961. La quatrième ouverture 118 forme un trou de fixation.

La deuxième canalisation 120 est disposée radialement à l'extérieur de la première canalisation (soit de l'alésage interne) et de manière concentrique. La deuxième canalisation 120 est formée également par l'espace entre la paroi du tube 961 et la paroi du tube 960. Dans cet exemple de réalisation, la deuxième canalisation 120 débouche d'une part, dans une ouverture annulaire 122 qui forme l'entrée de la deuxième canalisation 120. L'ouverture annulaire 122 est définie dans une face aval 960b du premier tube 960 et dans laquelle débouche le troisième alésage. La deuxième canalisation 120 est formée au moins en partie par l'espace annulaire formé entre la surface externe du deuxième tube 961 cylindrique et la surface interne du premier tube 960. De la sorte, l'ouverture annulaire 122a est formée par le premier tube 960 qui s'étend à l'intérieur de l'ouverture 122 de l'alésage 115. La deuxième canalisation 120 débouche d'autre part, dans les deuxièmes orifices 123 qui forment la sortie de celle-ci. Ces premier et deuxième orifices débouchent sur la surface cylindrique externe 103 de la partie stator 96. Les premiers et deuxièmes orifices 121, 123 sont décalés suivant l'axe longitudinal. De même, l'ouverture annulaire 122 est située dans un plan radial qui est décalé du plan dans lequel est défini le perçage 961d.

L'organe de stator 98 comprend les conduites 124 et 125 qui sont destinées à être en communication fluidique avec les canalisations 119, 120 de la partie stator 96. La première conduite 124 et la deuxième conduite 125 sont reliées à la source d'alimentation via les tuyaux et débouchent chacune dans la cavité d'ancrage 105.

Des organes de fixation 150 sont prévus de manière à maintenir solidement la partie stator 96 dans la cavité d'ancrage 105 de l'organe de stator 98. Sur l'exemple représenté de la figure 8, les organes de fixation 105 comprennent une unique vis 150a dont la tige filetée traverse la quatrième ouverture 118 ménagée dans la paroi 117. Le fond 107 comprend une lumière 107a d'axe coaxial avec l'axe de la cavité d'ancrage 105. La vis 150a traverse également la lumière 107a. La paroi 117 comprend une face aval définie dans un plan radial et en butée contre le fond 107 de la cavité d'ancrage 105. De la sorte, la paroi 117 et le fond 107 forment l'interface de fixation recevant de manière amovible les organes de fixation 150. Ces derniers assurent une liaison axiale qui est alignée avec l'axe de l'alésage interne. Lors de la fixation de la paroi 117 sur le fond 107, une coïncidence, avec étanchéité, de la première canalisation 119 et de la deuxième canalisation 120 et des conduites 124, 125 est réalisée.

L'entrée de la première canalisation 119 (perçage radial 961d) est en coïncidence avec la sortie de la première conduite 124. De même, l'entrée de la deuxième canalisation 120 est en coïncidence avec la sortie de la deuxième conduite 125. Les coïncidences sont réalisées à des positions axiales décalées. Le fluide en sortie des première et deuxième conduites ne débouche pas au même endroit dans la cavité d'ancrage 105. L'entrée de la première canalisation 119 est en aval de l'entrée de la deuxième canalisation 120.

Des moyens d'étanchéité sont prévus entre la surface cylindrique externe 103 de la partie stator 96 et une surface radialement interne 127 de l'organe de stator 98 pour éviter les fuites de fluide. Les moyens d'étanchéité comprennent des joints annulaires qui sont agencés de part et d'autre de l'ouverture annulaire 122 et du perçage radial 961d. En particulier, un joint annulaire 128 est disposé en aval de la coïncidence de la première conduite 124 et première canalisation 119 et un joint annulaire 128 est disposé en aval de la coïncidence de la deuxième conduite 124 et deuxième canalisation 120. Un autre joint d'étanchéité 128 est disposé en amont de la coïncidence de la deuxième conduite et deuxième canalisation.

L'organe de stator 98 permet de réaliser ainsi les connexions hydrauliques entre les canalisations de la partie stator 96 et les conduites 124, 125, ainsi que les connexions mécaniques du dispositif de transfert 94 en fixant la paroi 117 de la deuxième extrémité 96b sur le fond 107. L'organe de stator 98 permet également le guidage de la partie stator 96 en recevant les tiges 113.

Dans l'exemple de la figure 8, la partie stator 96 du dispositif de transfert 94 comprend le passage 83 permettant l'accès de l'outil externe 170 pour accéder aux organes de fixation et qui traverse de part et d'autre le dispositif de transfert. Le passage ici est un unique passage. Celui-ci est formé par l'alésage interne qui sert aussi de première canalisation 119. L'axe de l'alésage interne est coaxial à l'axe de la quatrième ouverture 118. Nous comprenons en d'autres termes, que les organes de fixation sont placés en aval du dispositif de transfert.

Lors du montage avec les organes de fixation 150, la vis 150a est insérée dans l'alésage 115 de la partie stator 96 à l'aide de l'outil externe 170 et traverse la quatrième ouverture et la lumière. La tête de vis se plaque contre la face amont de la paroi 117. Cette étape de montage est réalisée de manière inversée pour le démontage. La tête de vis baigne ainsi dans le fluide en situation d'installation puisque l'alésage interne 115 fait office de première canalisation 119.

Suivant une caractéristique avantageuse, mais non limitative, la partie de stator 96 comprend des éléments anti-rotation destinés à empêcher la rotation de la partie stator 96 par rapport à l'organe de stator. Les éléments anti-rotation comprennent des tiges 113 (ou piges) qui sont allongées suivant l'axe longitudinal. Trois tiges 113 s'étendent depuis la bride 108 vers l'aval et sont chacune reçue dans un passage 114 ménagé dans l'organe de stator. Chaque tige 113 est rapportée et fixée sur la bride avec des organes de fixation adéquats ou est formée d'un seul tenant (venue de matière) avec la bride 108. Chaque passage 114 traverse l'organe de stator 98 de part et d'autre suivant un axe parallèle à l'axe longitudinal. En d'autres termes, le passage 114 débouche d'une part sur la face amont, et d'autre part sur la face aval. Les tiges 113 et passages 114 forment également des moyens d'emmanchement en aveugle de la partie stator sur l'organe de stator 98. A cet effet, les passages 114 présentent une section décroissante de l'amont vers l'aval. Cela facilite l'insertion des tiges 113 dans les passages 114. Par ailleurs les extrémités libres 113a des tiges présentent une section axiale tronconique ou une surface externe convergeant vers un unique sommet. De la sorte, l'insertion des tiges 113 est davantage facilitée dans les passages 114, l'espace entre l'extrémité 113a et la portion de section supérieure étant supérieure au reste du passage 114. Les tiges 113 garantissent également le maintien angulaire du dispositif de transfert lors du montage par rapport à l'organe de stator 98. De manière alternative, les éléments anti-rotation sont portés par l'organe de stator 98 et les passages 114 sont ménagés dans la partie stator 96 du dispositif de transfert de fluide 94.

Dans le cadre du procédé de montage du dispositif de transfert de la figure 8, lors de l'étape de l'étape de fixation de l'interface de fixation, la ou les tiges 113 sont introduites dans les passages 114 correspondants et la deuxième extrémité 96b de la partie stator 96 est introduite dans la cavité d'ancrage 105. Le montage du dispositif de transfert 94 dans le moyen de commande 52 est facilité car le diamètre D6 des tiges 113 et le diamètre externe D8 de la bride 108' sont inférieurs au diamètre externe D4 de la partie rotor 97. Le diamètre D6 déterminé par un cercle dans lequel sont inscrits l'ensemble des tiges 113. De même, il serait aisé de laisser le moyen de commande 52 monté sur l'arbre de soufflante 32 et d'extraire uniquement le dispositif de transfert 94 à travers le moyen de commande 52 grâce à cette configuration.

La figure 9 illustre un autre mode de réalisation du dispositif de transfert 94. Dans ce mode de réalisation, les éléments identiques ou sensiblement identiques et/ou avec les mêmes fonctions sont représentés par les mêmes références numériques que ceux du mode décrit précédemment. Dans ce mode de réalisation, la partie stator 96 est dotée également de l'alésage 115 qui est centré sur l'axe longitudinal. La différence entre le mode de réalisation de la figure 8 et celle de la figure 9 réside dans le fait que la première canalisation 119 et la deuxième canalisation 120 sont concentriques avec l'alésage interne 115. En particulier, la première canalisation 119, annulaire, est disposée radialement à l'extérieur de l'alésage interne 115 et de manière coaxiale avec l'axe longitudinal. La deuxième canalisation 120 est également annulaire et est disposée radialement à l'extérieur de la première canalisation 119, de manière coaxiale avec l'axe longitudinal. L'interface de fixation est réalisée par la paroi de la partie stator 96 et la paroi de fond de l'organe de stator 98. Ce dernier est fixé sur l'élément tubulaire 99. Lorsque la partie stator 96 est montée sur l'organe de stator 98, les entrées des première et deuxième canalisations 119, 120 sont en communication fluidique avec la cavité d'ancrage 105 de l'organe de stator 98. La deuxième extrémité 96b est fixée sur le fond de la cavité d'ancrage 105 avec l'organe de fixation 150. Dans cet exemple, aucun fluide ne circule dans l'alésage interne 115. Le montage et démontage est simple et efficace. Cet exemple de réalisation est encore plus compact. Dans cet exemple de réalisation, le diamètre radialement externe D4 de la partie rotor 94 est également inférieur ou égal au diamètre externe D8 de la bride 108' de la partie stator 96. Il pourrait être intéressant que le diamètre D4 soit supérieur au diamètre D8 de la bride 108' de sorte à extraire le dispositif de transfert 94 sans démonter le moyen de commande 52.

Par ailleurs, afin d'éviter toute fuite de fluide lors du démontage, un joint (carbone ou autre) est monté en amont du palier de guidage 140 en amont. Plus précisément encore, afin de conserver l'étanchéité de la deuxième extrémité 96b de la partie stator 96 dans la cavité d'ancrage 105, et notamment des interfaces entre la partie stator 96 et l'organe de stator 98, il a été prévu un étagement des distances mesurées pour chaque interface. Par exemple, l'interface entre la paroi interne de l'organe de stator 98 et une portion de la surface externe de la deuxième extrémité 96, autour de la deuxième canalisation 120, présente une longueur l1. De même, l'interface entre la paroi interne de l'organe de stator 98 et une portion de la surface externe de la deuxième extrémité 96, autour de la première canalisation 119, présente une longueur l1. L'interface entre la paroi interne de l'organe de stator et une portion de la surface externe de la deuxième extrémité 96, autour de l'alésage 115 (et en aval d'un joint d'étanchéité 128c), présente une longueur l2. La longueur l2 est supérieure à la longueur l1. Il peut être prévu un système de vidange par aspiration.

L'étape d'accostage de la deuxième extrémité 96b dans l'organe de stator 96 est réalisée de manière identique à celle du mode de réalisation précédent. Pour le démontage, il suffit de dévisser la vis 150a pour désolidariser le dispositif de transfert 94 du stator de la turbomachine.

Dans les différents modes de réalisation et tel qu'illustré sur la figure 1, le moyen de commande 52 comprend des moyens d'alimentation des chambres 72a, 72b. Les moyens d'alimentation comprennent un troisième orifice 132 qui traverse la paroi de corps annulaire 53 suivant l'axe radial au niveau de la paroi de la portion tubulaire 62b. Cet orifice 132 débouche dans la chambre 72a, en amont et est placé sensiblement à l'endroit où débouche le premier canal de la partie rotor. De la sorte, le fluide peut circuler dans la première canalisation 119, dans le premier canal 130, puis dans la chambre 72a. Les moyens d'alimentation comprennent un quatrième orifice 133 qui traverse la paroi du corps annulaire suivant l'axe radial et au niveau de la portion tubulaire. L'orifice 133 débouche dans la chambre 72b, en aval et est placé à l'endroit où débouche le deuxième canal 131 de la parie rotor 97. De la sorte, le fluide peut circuler dans la deuxième canalisation 120, dans le deuxième canal 131, puis dans la chambre 72b. Le troisième orifice 132 est disposé dans un plan qui est décalé du plan dans lequel est disposé le quatrième orifice 133 suivant l'axe longitudinal. Le troisième orifice 132 est placé en amont du quatrième orifice 133.

Des moyens d'étanchéité sont également agencés entre la surface radialement externe 129 de la partie rotor 97 (chacun dans une gorge) et la surface radialement interne 134 de la portion tubulaire pour éviter les fuites de fluide à l'intérieur du moyen de commande 52. Les moyens d'étanchéité comprennent des joints annulaires 136 qui sont agencés axialement de part et d'autre du deuxième canal 131 et aussi de l'orifice 133. Des joints d'étanchéité sont également installés en amont du premier canal 130 et aussi de l'orifice 132.

Dans les différents modes de réalisation exposés ou alternatives, le fluide est une huile. Bien entendu, le fluide peut être un fluide incompressible.

## Revendications

1. Dispositif de transfert (94) de fluide pour turbomachine d'axe longitudinal X, le dispositif de transfert (94) comportant une partie stator (96) qui est destinée à être reliée à un équipement statorique (98, 99) de la turbomachine et une partie rotor (97) dans laquelle est engagée la partie stator (96), la partie rotor (97) étant mobile en rotation autour de la partie stator (96) suivant l'axe longitudinal, **caractérisé en ce que** l'équipement statorique (98, 99) comprend au moins une conduite (124, 125) alimentée par une source d'alimentation (91) et en communication fluidique avec au moins une canalisation (119, 120) de la partie stator (96), la partie de stator (96) et l'équipement statorique (98, 99) comportant une interface de fixation destinée à recevoir de manière amovible des organes de fixation (85 ; 150), l'interface de fixation et les organes de fixation (85 ; 150) étant configurés de manière à réaliser une coïncidence, avec étanchéité, de la canalisation (119, 120) et de la conduite (124, 125), et **en ce que** le dispositif de transfert (94) comprend au moins un passage (83) permettant l'accès d'un outil externe (170) en amont du dispositif de transfert (94) pour accéder aux organes de fixation (85 ; 150) et traversant de part et d'autre le dispositif de transfert (94).

2. Dispositif de transfert (94) selon la revendication précédente, **caractérisé en ce que** la partie rotor (97) s'étend entre une face amont (97a) et une face aval (97b) suivant l'axe longitudinal, la partie rotor (97) comprenant un alésage central (100) centré sur l'axe longitudinal et dans lequel est engagée la partie stator (96), l'alésage central (100) débouchant dans une première cavité (101) s'ouvrant sur la face amont (97a) et dans une deuxième cavité (102) s'ouvrant sur la face aval (97b), des paliers de guidage (140, 142) en rotation de la partie rotor (97) par rapport à la partie stator (97) étant placés dans la première cavité (101) et dans la deuxième cavité (102), la partie stator (96) s'étendant, suivant l'axe longitudinal, entre une première extrémité (96a) qui est disposée dans la première cavité (101) et une deuxième extrémité (96b) qui s'étend à l'extérieur de la partie rotor (97).

3. Dispositif de transfert (94) selon l'une quelconque des revendications précédentes, **caractérisé en ce que** la partie stator (96) comprend une première canalisation (119) et une deuxième canalisation (120) qui sont distinctes, au moins une portion de la deuxième canalisation (120) s'étendant à l'extérieur de la première canalisation (119).

4. Dispositif de transfert (94) selon la revendication précédente, **caractérisé en ce que** la partie rotor (97) comprend des canaux (130, 131) qui sont en communication fluidique d'une part, avec les canalisations (119, 120) et d'autre part, avec des moyens d'alimentation d'un organe de la turbomachine.

5. Dispositif de transfert (94) selon la revendication 2 ou selon la revendication 2 et l'une quelconque des revendications 3 à 4, **caractérisé en ce que** la partie rotor (97) comprend le passage (83) qui est disposé radialement à l'extérieur de l'alésage central (100) et **en ce que** l'interface de fixation comprend une collerette (111) portée par l'équipement statorique (99, 98) et une bride radiale (108 ; 108') portée par la partie stator (96), la bride (108 ; 108') et la collerette (111) s'étendant radialement vers l'extérieur et étant fixées ensemble par les organes de fixation (85) assurant une liaison axiale qui est alignée avec le passage (83).

6. Dispositif de transfert (94) selon la revendication précédente, **caractérisé en ce que** la bride radiale (108) de la partie stator (96) comprend au moins un trou (108c) d'axe (B) et la partie rotor (97) présente un diamètre radialement externe (D4) qui est supérieur au diamètre (D3) défini par l'axe (B) du trou (108c) de la bride radiale (108) de la partie stator (96).

7. Dispositif de transfert (94) selon la revendication précédente, **caractérisé en ce que** la collerette (111) de l'équipement statorique (98, 99) comporte au moins un trou correspondant (111c) et **en ce que** les organes de fixation (85) sont imperdables et comprennent au moins un écrou (87) serti sur la collerette radiale (111) de l'équipement statorique (98, 99) en regard du trou correspondant (111c), au moins une vis (86) étant retenue dans le trou (108c) de la partie stator (96) par une bague de retenue (88), et des moyens de mise à l'écart (89) de la vis du trou correspondant (111c).

8. Dispositif de transfert (94) selon l'une des revendications 3 à 4, **caractérisé en ce que** la partie stator (96) est dotée d'un alésage interne (115) qui est centré sur l'axe longitudinal et qui forme au moins en partie la première canalisation (119), la deuxième canalisation (120), annulaire, étant disposée radialement à l'extérieur de la première canalisation (119) et de manière coaxiale avec l'axe longitudinal.

9. Dispositif de transfert (94) selon l'une des revendications 3 à 4, **caractérisé en ce que** la partie stator (96) est dotée d'un alésage interne (115) qui est centré sur l'axe longitudinal et qui forme au moins en partie le passage, la première canalisation (119), annulaire, étant disposée radialement à l'extérieur de l'alésage interne (115) et de manière coaxiale avec l'axe longitudinal et **en ce que** la deuxième canalisation (120), annulaire, est disposée radialement à l'extérieur de la première canalisation (119) et de manière coaxiale avec l'axe longitudinal.

10. Dispositif de transfert (94) selon la revendication 2 ou selon la revendication 2 et l'une quelconque des revendications 3 à 4 et 8 à 9, **caractérisé en ce que** l'équipement statorique (98, 99) comprend une cavité d'ancrage (105) dans laquelle est emmanchée de manière étanche et en aveugle la deuxième extrémité (96b) de la partie stator (96), la cavité d'ancrage (105) débouchant dans une ouverture (106) ménagée dans une face amont (98a) de l'équipement statorique (98, 99) et comprenant un fond (107) disposé à l'opposé de l'ouverture (106).

11. Dispositif de transfert (94) selon la revendication précédente et selon l'une des revendications 8 et 9, **caractérisé en ce que** l'interface de fixation comprend une première paroi (117) qui est disposée à la deuxième extrémité (96b) de la partie stator (96) et une deuxième paroi (107) formant un fond de la cavité d'ancrage (105), la première paroi (117) étant fixée à la deuxième paroi (107) de la cavité d'ancrage (105) via les organes de fixation (150) assurant une liaison axiale qui est alignée avec l'axe de l'alésage interne.

12. Dispositif de transfert (94) selon la revendication 5 ou selon la revendication 5 et l'une des revendications 6 à 11, **caractérisé en ce que** la partie rotor (97) présente un diamètre radialement externe (D4) qui est supérieur ou égal au diamètre externe (D5) de la bride (108 ; 108') de la partie stator (96), la partie stator (96) s'étendant entre la partie rotor (97) et l'équipement statorique (98, 99) suivant l'axe longitudinal.

13. Dispositif de transfert (94) selon l'une des revendications 1 à 12, **caractérisé en ce que** les organes de fixation (85 ; 150) sont placés en aval du dispositif de transfert.

14. Turbomachine d'aéronef comprenant au moins un dispositif de transfert (94) selon l'une quelconque des revendications précédentes.

15. Procédé de montage d'un dispositif de transfert (94) de fluide selon l'une quelconque des revendications 1 à 13 dans un organe d'une turbomachine, le procédé comprenant :
- une étape d'assemblage du dispositif de transfert (94) de fluide dans laquelle la partie stator (96) est insérée dans la partie rotor (97),
- une étape de fixation du dispositif de transfert (94) de fluide sur le moyen de commande (52),
- une étape de mise en place du moyen de commande (52) équipé du dispositif de transfert (94) dans l'organe de turbomachine, et
- une étape de fixation de l'interface de fixation de la partie stator (96) et de l'équipement statorique (98, 99) au moyen des organes de fixation (85 ; 150) de manière à réaliser une coïncidence, avec étanchéité, de la canalisation (119, 120) du dispositif de transfert (94) et de la conduite (124, 125) de l'équipement statorique, l'étape de fixation comprenant une sous étape d'insertion d'un outil externe (170) dans au moins le passage (83) du dispositif de transfert (94) pour accéder aux organes de fixation (85 ; 150).

## Patentansprüche

1. Fluidübertragungsvorrichtung (94) für ein Turbotriebwerk mit einer Längsachse X, wobei die Fluidübertragungsvorrichtung (94) umfasst: einen Statorteil (96), der dazu ausgelegt ist, mit einer Statorausrüstung (98, 99) des Turbotriebwerks verbunden zu werden, und einen Rotorteil (97), in den der Statorteil (96) eingreift, wobei der Rotorteil (97) um den Statorteil (96) entlang der Längsachse drehbar ist, **dadurch gekennzeichnet, dass** die Statorausrüstung (98, 99) mindestens eine Leitung (124, 125) umfasst, die von einer Versorgungsquelle (91) gespeist wird und in strömungstechnischer Kommunikation mit mindestens einem Kanal (119, 120) des Statorteils (96) steht, der Statorteil (96) und die Statorausrüstung (98, 99) eine Befestigungsschnittstelle umfassen, die dazu ausgelegt ist, lösbare Befestigungselemente (85; 150) aufzunehmen, wobei die Befestigungsschnittstelle und die Befestigungselemente (85; 150) so konfiguriert sind, dass sie eine abdichtende Koinzidenz des Kanals (119, 120) und der Leitung (124, 125) bewirken, und dadurch, dass die Fluidübertragungsvorrichtung (94) mindestens einen Durchgang (83) umfasst, der den Zugang eines externen Werkzeugs (170) stromaufwärts der Fluidübertragungsvorrichtung (94) ermöglicht, um zu den Befestigungselementen (85; 150) zu gelangen, und der die Fluidübertragungsvorrichtung (94) beidseitig durchquert.

2. Fluidübertragungsvorrichtung (94) nach dem vorstehenden Anspruch, **dadurch gekennzeichnet, dass** sich der Rotorteil (97) in Richtung der Längsachse zwischen einer stromaufwärtigen Seite (97a) und einer stromabwärtigen Seite (97b) aufspannt, wobei der Rotorteil (97) eine zentrale Bohrung (100) umfasst, die auf der Längsachse zentriert ist und in die der Statorteil (96) eingreift, wobei die zentrale Bohrung (100) in einen ersten Hohlraum (101), der sich zur stromaufwärtigen Seite (97a) öffnet, und in einen zweiten Hohlraum (102), der sich zur stromabwärtigen Seite (97b) öffnet, mündet, wobei Lager (140, 142) zur drehbaren Führung des Rotorteils (97) relativ zum Statorteil (96) in dem ersten Hohlraum (101) und in dem zweiten Hohlraum (102) angeordnet sind, und wobei der Statorteil (96) sich in Richtung der Längsachse von einem ersten Ende (96a), das in dem ersten Hohlraum (101) angeordnet ist, zu einem zweiten Ende (96b) erstreckt, das über den Rotorteil (97) hinausragt.

3. Fluidübertragungsvorrichtung (94) nach einem der vorstehenden Ansprüche, **dadurch gekennzeichnet, dass** der Statorteil (96) einen ersten Kanal (119) und einen zweiten Kanal (120) umfasst, die voneinander getrennt sind, wobei sich mindestens ein Abschnitt des zweiten Kanals (120) außerhalb des ersten Kanals (119) erstreckt.

4. Fluidübertragungsvorrichtung (94) nach dem vorstehenden Anspruch, **dadurch gekennzeichnet, dass** der Rotorteil (97) Kanäle (130, 131) umfasst, die einerseits mit den Kanälen (119, 120) in Fluidverbindung stehen und andererseits mit Versorgungseinrichtungen für ein Bauteil des Turbotriebwerksin strömungstechnischer Kommunikation steht.

5. Fluidübertragungsvorrichtung (94) nach Anspruch 2 oder nach Anspruch 2 in Verbindung mit einem der Ansprüche 3 bis 4, **dadurch gekennzeichnet, dass** der Rotorteil (97) den Durchgang (83) umfasst, der radial außerhalb der zentralen Bohrung (100) angeordnet ist, und dass die Befestigungsschnittstelle einen Flansch (111), der von der Statorausrüstung (99, 98) getragen wird, und eine radiale Flansche (108; 108'), die vom Statorteil (96) getragen wird, umfasst, wobei sich die Flansche (108; 108') und der Flansch (111) radial nach außen erstrecken und durch die Befestigungselemente (85) miteinander verbunden sind, die eine axiale Verbindung herstellen, die mit dem Durchgang (83) fluchtet.

6. Fluidübertragungsvorrichtung (94) nach dem vorstehenden Anspruch, **dadurch gekennzeichnet, dass** die radiale Flansche (108) des Statorteils (96) mindestens ein Loch (108c) mit einer Achse (B) aufweist und der Rotorteil (97) einen radial äußeren Durchmesser (D4) besitzt, der größer ist als der Durchmesser (D3), der durch die Achse (B) des Lochs (108c) der radialen Flansche (108) des Statorteils (96) definiert wird.

7. Fluidübertragungsvorrichtung (94) nach dem vorstehenden Anspruch, **dadurch gekennzeichnet, dass** der Flansch (111) der Statorausrüstung (98, 99) mindestens ein entsprechendes Loch (111c) aufweist und dass die Befestigungselemente (85) gegen Verlust gesichert sind und mindestens eine Mutter (87) umfassen, die auf den radialen Flansch (111) der Statorausrüstung (98, 99) gegenüber dem entsprechenden Loch (111c) aufgepresst ist, wobei mindestens eine Schraube (86) durch einen Sicherungsring (88) in dem Loch (108c) des Statorteils (96) gehalten wird, und Abstandsmittel (89) vorhanden sind, um die Schraube von dem entsprechenden Loch (111c) beabstandet zu halten.

8. Fluidübertragungsvorrichtung (94) nach einem der Ansprüche 3 bis 4, **dadurch gekennzeichnet, dass** der Statorteil (96) mit einer inneren Bohrung (115) versehen ist, die auf der Längsachse zentriert ist und zumindest teilweise den ersten Kanal (119) bildet, wobei der zweite Kanal (120), ringförmig ausgebildet, radial außerhalb des ersten Kanals (119) und koaxial zur Längsachse angeordnet ist.

9. Fluidübertragungsvorrichtung (94) nach einem der Ansprüche 3 bis 4, **dadurch gekennzeichnet, dass** der Statorteil (96) mit einer inneren Bohrung (115) versehen ist, die auf der Längsachse zentriert ist und zumindest teilweise den Durchgang bildet, wobei der erste Kanal (119), ringförmig ausgebildet, radial außerhalb der inneren Bohrung (115) und koaxial zur Längsachse angeordnet ist, und dadurch, dass der zweite Kanal (120), ringförmig ausgebildet, radial außerhalb des ersten Kanals (119) und koaxial zur Längsachse angeordnet ist.

10. Fluidübertragungsvorrichtung (94) nach Anspruch 2 oder nach Anspruch 2 in Verbindung mit einem der Ansprüche 3 bis 4 und 8 bis 9, **dadurch gekennzeichnet, dass** die Statorausrüstung (98, 99) eine Verankerungskavität (105) umfasst, in die das zweite Ende (96b) des Statorteils (96) abgedichtet und blind eingesteckt ist, wobei die Verankerungskavität (105) in eine Öffnung (106) mündet, die in einer stromaufwärtigen Seite (98a) der Statorausrüstung (98, 99) ausgebildet ist, und einen Boden (107) umfasst, der gegenüber der Öffnung (106) angeordnet ist.

11. Fluidübertragungsvorrichtung (94) nach dem vorstehenden Anspruch und nach einem der Ansprüche 8 und 9, **dadurch gekennzeichnet, dass** die Befestigungsschnittstelle eine erste Wand (117), die am zweiten Ende (96b) des Statorteils (96) angeordnet ist, und eine zweite Wand (107), die einen Boden der Verankerungskavität (105) bildet, umfasst, wobei die erste Wand (117) über die Befestigungselemente (150) mit der zweiten Wand (107) der Verankerungskavität (105) verbunden ist, wodurch eine axiale Verbindung hergestellt wird, die mit der Achse der inneren Bohrung fluchtet.

12. Fluidübertragungsvorrichtung (94) nach Anspruch 5 oder nach Anspruch 5 in Verbindung mit einem der Ansprüche 6 bis 11, **dadurch gekennzeichnet, dass** der Rotorteil (97) einen radial äußeren Durchmesser (D4) aufweist, der größer oder gleich dem Außendurchmesser (D5) der Flansche (108; 108') des Statorteils (96) ist, wobei sich der Statorteil (96) in Richtung der Längsachse zwischen dem Rotorteil (97) und der Statorausrüstung (98, 99) erstreckt.

13. Fluidübertragungsvorrichtung (94) nach einem der Ansprüche 1 bis 12, **dadurch gekennzeichnet, dass** die Befestigungselemente (85; 150) stromabwärts der Fluidübertragungsvorrichtung angeordnet sind.

14. Turbotriebwerk eines Luftfahrzeugs, umfassend mindestens eine Fluidübertragungsvorrichtung (94) nach einem der vorstehenden Ansprüche,

15. Montageverfahren einer Fluidübertragungsvorrichtung (94) nach einem der Ansprüche 1 bis 13 in ein Bauteil einer Turbomaschine, wobei das Verfahren umfasst:
- einen Schritt des Zusammenbaus der Fluidübertragungsvorrichtung (94), bei dem der Statorteil (96) in den Rotorteil (97) eingeführt wird,
- einen Schritt der Befestigung der Fluidübertragungsvorrichtung (94) an dem Steuermittel (52),
- einen Schritt der Anordnung des mit der Fluidübertragungsvorrichtung (94) ausgestatteten Steuermittels (52) in dem Turbomaschinenbauteil, und
- einen Schritt des Befestigens der Befestigungsschnittstelle des Statorteils (96) und der Statorausrüstung (98, 99) mittels der Befestigungselemente (85; 150), um eine abdichtende Koinzidenz des Kanals (119, 120) der Fluidübertragungsvorrichtung (94) und der Leitung (124, 125) der Statorausrüstung zu bewirken, wobei der Befestigungsschritt einen Teilschritt des Einführens eines externen Werkzeugs (170) in mindestens den Durchgang (83) der Fluidübertragungsvorrichtung (94) umfasst, um zu den Befestigungselementen (85; 150) zu gelangen.

## Claims

1. Transfer device (94) of a fluid for a turbomachine with a longitudinal axis (X), the transfer device (94) comprising a stator portion (96) which is intended to be connected to a stator equipment (98, 99) of the turbomachine and a rotor portion (97) wherein is engaged the stator portion (96), the rotor portion (97) being movable in rotation around the stator part (96) according to the longitudinal axis, **characterised in that** the stator equipment (98, 99) comprises at least one conduit (124, 125) fed by a feed source (91) and in fluidic communication with at least one pipeline (119, 120) of the stator portion (96), the stator portion (96) and the stator equipment (98, 99) comprising an attachment interface intended to releasably receive attachment members (85; 150), the attachment interface and the attachment members (85; 150) being configured so as to make a coincidence, with sealing, of the pipeline (119, 120) and of the conduit (124, 125), and **in that** the transfer device (94) comprises at least one passage (83) allowing the access of an external tool (170) upstream of the transfer device (94) for accessing the attachment members (85; 150) and passing through the transfer device (94) on both sides.

2. Transfer device (94) according to the preceding claim, **characterised in that** the rotor portion (97) extends between an upstream face (97a) and a downstream face (97b) along the longitudinal axis, the rotor portion (97) comprising a central bore (100) centred on the longitudinal axis and in which the stator portion (96) is engaged, the central bore (100) opening into a first cavity (101) opening onto the upstream face (97a) and into a second cavity (102) opening onto the downstream face (97b), bearings (140, 142) for guiding the rotor portion (97) in rotation with respect to the stator portion (97) being placed in the first cavity (101) and in the second cavity (102), the stator portion (96) extending, along the longitudinal axis, between a first end (96a) which is arranged in the first cavity (101) and a second end (96b) which extends outside the rotor portion (97).

3. Transfer device (94) according to any one of the preceding claims, **characterised in that** the stator portion (96) comprises a first pipeline (119) and a second pipeline (120) which are distinct, at least one segment of the second pipeline (120) extending outside the first pipeline (119).

4. Transfer device (94) according to the preceding claim, **characterised in that** the rotor portion (97) comprises channels (130, 131) which are in fluidic communication, on the one hand, with the pipelines (119, 120) and, on the other hand, with feeding means for feeding a member of the turbomachine.

5. Transfer device (94) according to claim 2 or according to claim 2 and any one of claims 3 to 4, **characterised in that** the rotor portion (97) comprises the passage (83) which is arranged radially outside the central bore (100) and **in that** the attachment interface comprises a collar (111) carried by the stator equipment (99, 98) and a radial flange (108; 108') carried by the stator portion (96), the flange (108; 108') and the collar (111) extending radially outward and being attached together by attachment members (85) ensuring an axial connection that is aligned with the passage (83).

6. Transfer device (94) according to the preceding claim, **characterised in that** the radial flange (108) of the stator portion (96) comprises at least one hole (108c) of axis (B) and the rotor portion (97) has a radially external diameter (D4) which is greater than the diameter (D3) defined by the axis (B) of the hole (108c) of the radial flange (108) of the stator portion (96).

7. Transfer device (94) according to the previous claim, **characterised in that** the collar (111) of the stator equipment (98, 99) comprises at least one corresponding hole (111c) and **in that** the attachment members (85) are captive and comprise at least one nut (87) crimped on the radial collar (111) of the stator equipment (98, 99) facing the corresponding hole (111c), at least one screw (86) being retained in the hole (108c) of the stator portion (96) by a retaining ring (88), and segregating means (89) for segregating the screw away from the corresponding hole (111c).

8. Transfer device (94) according to any of claims 3 to 4, **characterised in that** the stator portion (96) is provided with an internal bore (115) which is centred on the longitudinal axis and which at least partly forms the first pipeline (119), the second annular pipeline (120) being arranged radially outside the first pipeline (119) and coaxially with the longitudinal axis.

9. Transfer device (94) according to one of claims 3 to 4, **characterised in that** the stator portion (96) is provided with an internal bore (115) which is centred on the longitudinal axis and which at least partly forms the passage, the first annular pipeline (119) being arranged radially outside the internal bore (115) and coaxially with the longitudinal axis, and **in that** the second annular pipeline (120) is arranged radially outside the first pipeline (119) and coaxially with the longitudinal axis.

10. Transfer device (94) according to claim 2 or according to claim 2 and any one of claims 3 to 4 and 8 to 9, **characterised in that** the stator equipment (98, 99) comprises an anchoring cavity (105) into which the second end (96b) of the stator portion (96) is sleeved in a sealed and blind manner, the anchoring cavity (105) opening into an opening (106) provided in an upstream face (98a) of the stator equipment (98, 99) and comprising a bottom (107) arranged opposite the opening (106).

11. Transfer device (94) according to the preceding claim and according to any one of claims 8 and 9, **characterised in that** the attachment interface comprises a first wall (117) that is arranged at the second end (96b) of the stator portion (96) and a second wall (107) forming a bottom of the anchoring cavity (105), the first wall (117) being attached to the second wall (107) of the anchoring cavity (105) via the attachment members (150) ensuring an axial connection that is aligned with the axis of the internal bore.

12. Transfer device (94) according to claim 5 or according to claim 5 and any one of claims 6 to 11, **characterised in that** the rotor portion (97) has a radially external diameter (D4) which is greater than or equal to the external diameter (D5) of the flange (108; 108') of the stator portion (96), the stator portion (96) extending between the rotor portion (97) and the stator equipment (98, 99) along the longitudinal axis.

13. Transfer device (94) according to any one of claims 1 to 12, **characterised in that** the attachment members (85; 150) are arranged downstream of the Transfer device.

14. Aircraft turbomachine comprising at least one transfer device (94) according to any of the preceding claims.

15. Method for mounting a transfer device (94) of a fluid according to any of claims 1 to 13 in a turbomachine member, the method comprising:
- a step of assembling the transfer device (94) of a fluid during which the stator portion (96) is inserted into the rotor portion (97),
- a step of attaching the transfer device (94) to the control means (52),
- a step of placing the control means (52) equipped with the transfer device (94) in the turbomachine member, and
- a step of attaching the attachment interface for attaching the stator portion (96) and the stator equipment (98, 99) by means of the attachment members (85; 150) so as to make a coincidence, with sealing, of the pipeline (119, 120) of the transfer device (94) and of the conduit (124, 125) of the stator equipment, the attachment step comprises a sub-step of inserting an external tool (170) into at least the passage (83) of the transfer device (94) to access the attachment members (85; 150).
